(19) Europäisches Patentamt
European Patent Office
Office européen des brevets

(11) **EP 3 007 397 A1**

(12) **EUROPEAN PATENT APPLICATION**

(43) Date of publication:
**13.04.2016 Bulletin 2016/15**

(51) Int Cl.:
**H04L 27/26** (2006.01)     **H04W 16/14** (2009.01)

(21) Application number: **15187906.1**

(22) Date of filing: **09.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(62) Document number(s) of the earlier application(s) in accordance with Art. 76 EPC:
**12882648.4 / 2 883 330**

(71) Applicant: **Qualcomm Incorporated San Diego, CA 92121-1714 (US)**

(72) Inventors:
- **Nan, Mingkai**
  **San Diego, CA, 92121-1714 (US)**
- **Li, Yan**
  **San Diego, CA, 92121-1714 (US)**
- **Chen, Shuping**
  **San Diego, CA, 92121-1714 (US)**

(74) Representative: **Wegner, Hans**
**Bardehle Pagenberg Partnerschaft mbB Patentanwälte, Rechtsanwälte Prinzregentenplatz 7 81675 München (DE)**

Remarks:
This application was filed on 01-10-2015 as a divisional application to the application mentioned under INID code 62.

(54) **METHODS AND APPARATUS FOR DEVICE TO DEVICE COMMUNICATIONS**

(57)    Various embodiments are directed to methods and apparatus efficiently utilizing WAN system resources that would otherwise go unused for device to device communications. In one exemplary embodiment the air link resources correspond to Guard Periods (GPs) in Special Sub-Frames of an LTE TDD WAN system. In various embodiments, wireless communications devices (106, 108, 110, 112, 114, 116) e.g., UE devices with device to device communications capability, self-configure to operate using a portion of the GP such as not to interfere with ongoing WAN signaling. Thus the WAN signaling and device to device signaling do not interfere with respect to one another. The D2D device receives from the eNB information concerning the GP duration and the maximum propagation delay in both the WAN and D2D cases and configures based on these informations the transmission and reception timing offsets and the cyclic prefix length for the D2D link.

FIGURE 8

**Description**

FIELD

Various embodiments are directed to device to device communications, and more particularly to controlling device to device communications utilizing unused air link resources in a time division duplex (TDD) wide area network system.

BACKGROUND

In view of the increasing demand for the limited available wireless spectrum, it is desirable to efficiently utilize available spectrum. Typically in a wide area network, the spectrum allocated to the wide area network can be, and sometimes is, utilized concurrently for device to device communications, e.g., where interference to the ongoing WAN communications by the device to device signaling is controlled within acceptable levels. With this approach the amount of air link resources available for device to device communications may vary over time, e.g., as a function of congestion in the WAN. In addition the level of interference to the device to device communications from the ongoing WAN signaling may vary over time. This approach makes for unreliable device to device communications.

In some WAN systems there are predetermined time intervals in which no WAN signaling occurs, e.g., due to the nature of the timing structure and/or the limitations of the communications devices. It would be beneficial if methods and apparatus were developed to efficiently identify and/or utilize these air link resources for device to device communications.

SUMMARY

Various embodiments are directed to methods and apparatus for identifying unused air link resources in a WAN system and/or utilizing air link resources for device to device communications. In some but not all embodiments, the air link resources that are identified and/or used correspond to Guard Periods (GPs) in Special Sub-Frames of an LTE TDD WAN system. In various embodiments, wireless communications devices, e.g., UE devices with device to device communications capability, self-configure to operate using a portion of the GP such as not to interfere with the ongoing WAN signaling. Thus the WAN signaling and device to device signaling are interference free with respect to one another. This approach facilities consistently available device to device air link communications resources in a recurring timing structure and provides a good likelihood that transmitted device to device signals will be successfully recovered.

In some embodiments, a wireless communications device, e.g., a UE device with device to device communications capability, receives information identifying one, more, or all of: a GP, a maximum propagation delay in the WAN system, and/or a maximum allowable propagation delay for D2D signaling. The wireless communications device determines various device to device network configuration control parameters for utilizing the GP based on the received information. Exemplary determined device to device control parameters which may be determined include: a device to device transmission timing offset, a device to device receiver timing offset, a device to device cyclic prefix length, and/or the number of device to device symbols in the unused GP. In some embodiments one, more, or all of the preceding parameters are determined by a device supporting D2D signals. After configuring in accordance with the determined device to device to device control parameters, the wireless communications device communicates device to device signals during one or more of the recurring GPs in accordance with the configuration parameters, e.g., transmitting and/or receiving device to device symbols. The device to device symbols may be used to convey device to device discovery information, device to device traffic control information, and/or device to device traffic signals, e.g., user data. The devices which support D2D signaling may, and in some embodiments are user devices, e.g., portable wireless terminals which support device to device, e.g., direct peer to peer communication without requiring the communication to pass through an infrastructure element such as a base station.

In some embodiments, the communications system may support both device to device signaling during GPs of SSFs and during normal subframes. In some such embodiments, the device to device communications during the normal subframes potentially interfere with and are interfered by the WAN communications, while device to device communications during the GPs are interference free with respect to the WAN in some embodiments. In some such embodiments, higher priority data is communicated during the GPs of the SSFs than during other time periods.

An exemplary method of operating a wireless communications device which supports device to device communication, in accordance with some embodiments, includes receiving information indicating a maximum propagation delay $T_C$ for a wide area network system and determining a device to device transmission timing offset relative to a point in time in a recurring wide area network timing structure. An exemplary wireless communications device, which supports device to device communication, in accordance with some embodiments, comprises at least one processor configured to: receive information indicating a maximum propagation delay $T_C$ for a wide area network system; and determine a device to device transmission timing offset relative to a point in time in a recurring wide area network timing structure. The exemplary wireless communications device further comprises memory coupled to said at least one processor.

An exemplary method of operating a wireless communication device which supports device to device (D2D) communication, in accordance with some embodiments, includes: receiving device to device (D2D) information including one or more device to device communication parameters, said one or more device to device communication parameters including at least one of: i) a timing offset parameter X indicating device to device transmission timing relative to a point in time in a recurring wide area network (WAN) timing structure, ii) a cyclic prefix length (CPL) to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length; configuring the wireless communication device to operate in accordance with the received one or more device to device communications parameters; and performing at least one of a device to device transmission or a device to device reception operation while the wireless communications device is configured to operate in accordance with the received one or more device to device communications parameters.

An exemplary wireless communication device which supports device to device (D2D) communication, in accordance with some embodiments, comprises at least one processor configured to: receive D2D information including one or more device to device communication parameters, said one or more device to device communication parameters including at least one of: i) a timing offset parameter X indicating device to device transmission timing relative to a point in time in a recurring wide area network (WAN) timing structure, ii) a cyclic prefix length (CPL) to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length; configure the wireless communication device to operate in accordance with the received one or more device to device communications parameters; and control the wireless communications device to perform at least one of a device to device transmission or a device to device reception operation while the wireless communications device is configured to operate in accordance with the received one or more device to device communications parameters. The exemplary wireless communications device further comprises memory coupled to said at least one processor.

While various embodiments have been discussed in the summary above, it should be appreciated that not necessarily all embodiments include the same features and some of the features described above are not necessary but can be desirable in some embodiments. Numerous additional features, embodiments, and benefits of various embodiments are discussed in the detailed description which follows.

## BRIEF DESCRIPTION OF THE FIGURES

Figure 1 is a drawing of an exemplary communications system in accordance with various exemplary embodiments.

Figure 2A is a first part of a flowchart of an exemplary method of operating a wireless communications device in accordance with various exemplary embodiments.

Figure 2B is a second part of a flowchart of an exemplary method of operating a wireless communications device in accordance with various exemplary embodiments.

Figure 3 is a drawing of an exemplary wireless communications device, e.g., a UE device supporting device to device communications, in accordance with various exemplary embodiments.

Figure 4A is a first portion of an assembly of modules which may be used in the exemplary wireless communications device of Figure 3.

Figure 4B is a second portion of an assembly of modules which may be used in the exemplary wireless communications device of Figure 3.

Figure 5 illustrates an exemplary communications system 500 in accordance with an exemplary embodiment.

Figure 6 illustrates that a portion of Guard Period (GP) of a Special Sub-Frame of in an LTE TDD system is potentially available to be utilized for device to device communications.

Figure 7 illustrates an exemplary recurring LTE TDD timing structure including two SSFs per frame in which portions of the GP may be utilized for device to device communications.

Figure 8 illustrates exemplary device to device timing information and exemplary device to device signaling in accordance with various exemplary embodiments.

Figure 9 is a flowchart of an exemplary method of operating a wireless communications device in accordance with various exemplary embodiments.

Figure 10 is a drawing of an exemplary wireless communications device, e.g., a UE device supporting device to device communications, in accordance with various exemplary embodiments.

Figure 11 is an assembly of modules which may be used in the exemplary wireless communications device of Figure 10.

## DETAILED DESCRIPTION

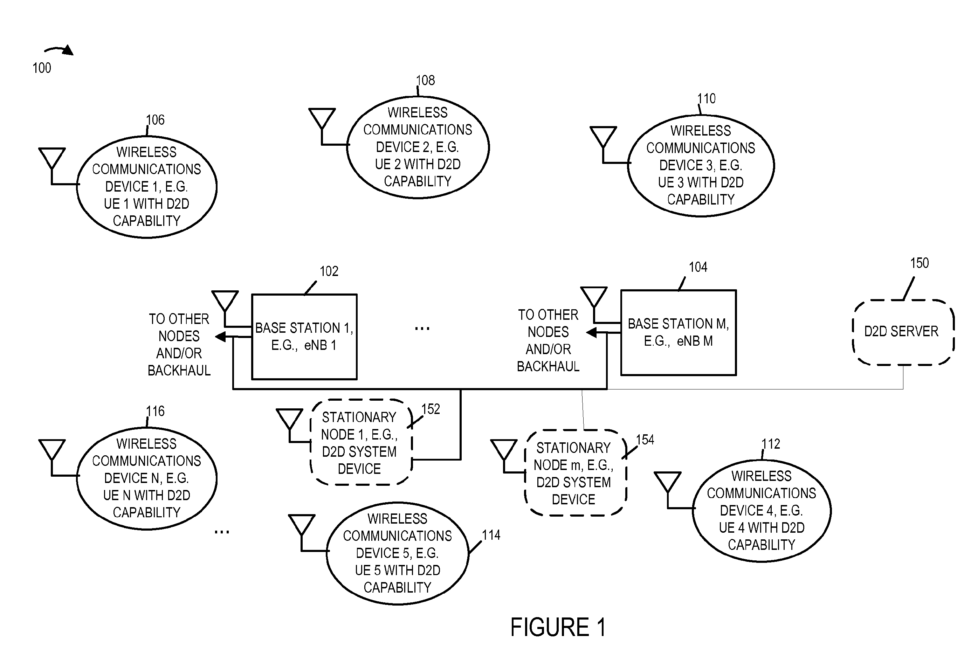

Figure 1 is a drawing of an exemplary communications system 100 in accordance with various exemplary embodiments. Exemplary communications system 100 includes a plurality of base stations (base station 1 102, ..., base station M 104) and a plurality of wireless communications devices with device to device communications capability (wireless communications device 1 106, wireless communications device 2 108, wireless communications device 3 110, wireless communications device 4 112, wireless communications device 5 114, ..., wireless communications device N 116). The base stations (102, ...., 104) are coupled to one another, to other nodes and/or a backhaul. In some embodiments, the cellular coverage range varies for at least some base stations in system 100. In some embodiments, the cellular coverage area for at least one base station in system 100 is within the cellular coverage area of another base station in system 100. In various embodiments, the base stations (102, ..., 104) are timing synchronized.

In some embodiments, the base stations (102, ..., 104) are eNBs, and the wireless communications devices (106, 108, 110, 112, 114, ..., 116) are UEs with device to device communications capability.

In some embodiments, system 100 further includes a device to device server 150 coupled to the base stations (102, ..., 104), e.g., via a backhaul. In some embodiments device to device server 150 stores information to be communicated to wireless communications devices with device to device capability, e.g., information indicating a maximum propagation delay information for the WAN, information indicating maximum propagation delay supported for device to device communications, and GP information, e.g., corresponding to a configured Guard Period (GP) in a SSF of a LTE TDD system. In various embodiments, system 100 includes a plurality of stationary nodes supporting device to device capability (stationary node 1 152, e.g., D2D system device 1, ...., stationary node m, e.g., D2D system device m). In this example, the stationary nodes (152, ..., 154) which include a wireless communications capability supporting D2D communications are also coupled to a backhaul network, e.g., via a wired and/or optical interface.

In some embodiments, base stations (102, ..., 104) transmit, e.g., in a broadcast message or messages, information indicating maximum propagation delay information for the WAN, information indicating maximum propagation delay supported for device to device communications, and GP information.

In some embodiments, a node or nodes supporting device to device communications, e.g., stationary node 1 152 and stationary node 154, transmit, e.g., via device to device signaling, information indicating maximum propagations delay for the WAN, information indicating maximum propagation delay supported for device to device communications, and GP information.

In various embodiments, the wireless communications devices (106, 108, 110, 112, 114, ..., 116) receive the transmitted maximum propagation delay information and transmitted GP information and determines device to device communications control information based on the received information. In some such embodiments, the determined device to device control information includes one or more of all of: a device to device transmission timing offset, a device to device receive timing offset, a cyclic prefix length to be used for device to device communications, and a number of symbol time periods in a device to device time period used for device to device communications. The wireless communications devices (106, 108, 110, 112, 114, ..., 116) use the determined device to device control information in transmitting and/or receiving device to device communications signals.

In some embodiments, the device to device communications occur during time periods in which the spectrum for the WAN is not being utilized for WAN signaling, e.g., during GP portions of Special Sub-Frame (SSF) periods in an LTE TDD recurring timing structure.

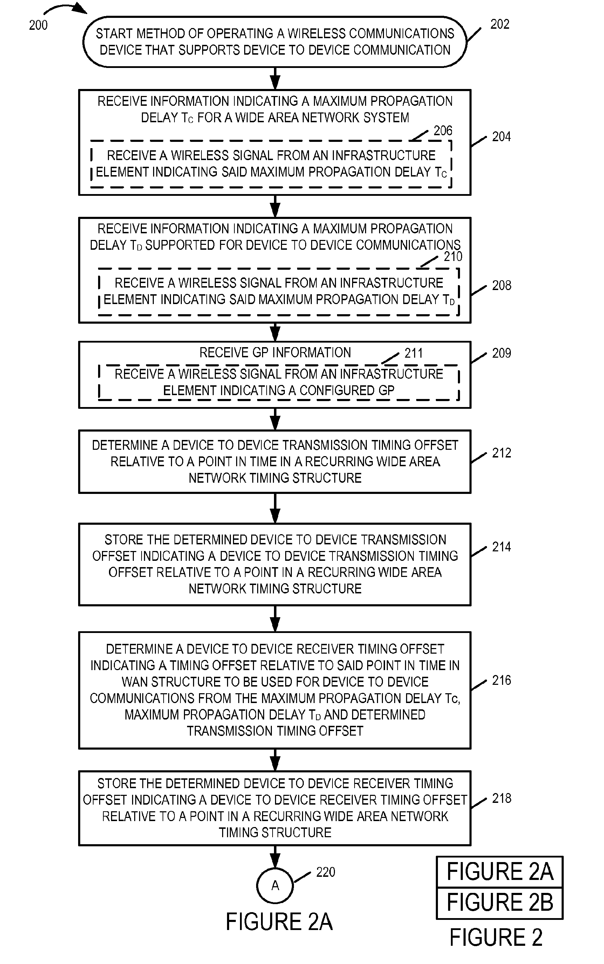

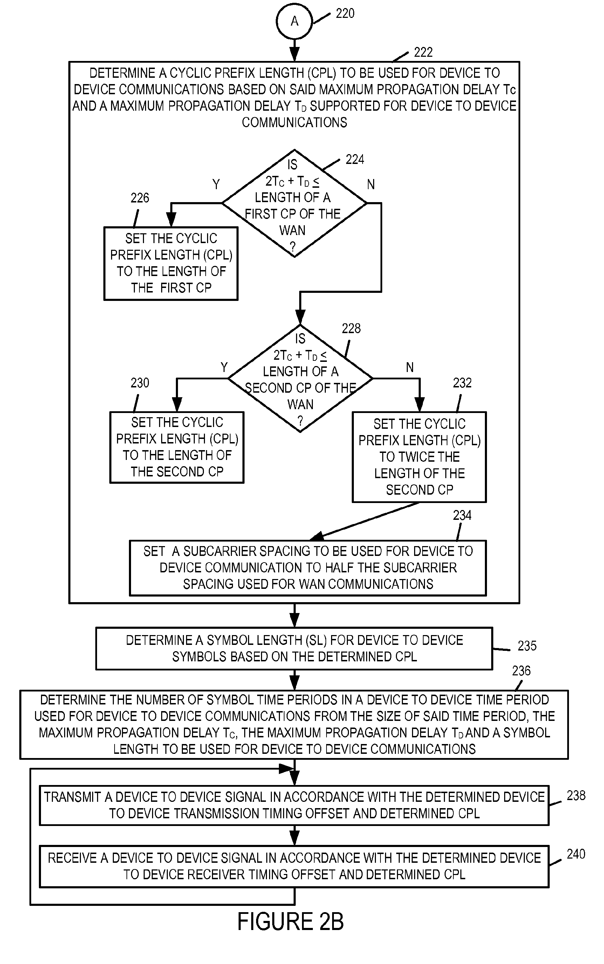

Figure 2, comprising the combination of Figure 2A and Figure 2B, is a flowchart 200 of an exemplary method of operating a wireless communications device in accordance with various exemplary embodiments. Operation starts in step 202, where the wireless communications device is powered on and initialized. Operation proceeds from start step 202 to step 204.

In step 204 the wireless communications device receives information indicating a maximum propagation delay $T_C$ for a wide area network (WAN) system. In some embodiments, the WAN system is an LTE system. In various embodiments, the maximum propagation delay $T_C$ corresponds to a maximum propagation delay for the largest LTE TDD cell radius supported in a WAN system. In some embodiments, step 204 includes step 206 in which the wireless communications device receives a wireless signal from an infrastructure element, e.g., an eNodeB, indicating said maximum propagations delay Tc. Operation proceeds from step 204 to step 208.

In step 208 the wireless communications device receives information indicating a maximum propagation delay $T_D$ supported for device to device communications. In some embodiments, step 208 includes step 210, in which the wireless communications device receives a wireless signal from an infrastructure element, e.g., an eNodeB, indicating said maximum propagation delay $T_D$.

In some embodiments, the wireless communications device receives a wireless broadcast signal from an infrastructure element, e.g., an eNodeB, which communicates information communicating both the maximum propagation delay value $T_C$ corresponding to the WAN and the maximum propagation delay value $T_D$ corresponding to the device to device signaling.

Operation proceeds from step 208 to step 209. In step 209 the wireless communications device receives GP information, e.g., information indicating the configured GP in an SSF of a LTE TDD system. The received GP information includes, e.g., information indicating a duration G of the GP. In some embodiments, step 209 includes step 211. In step 211 the wireless communications device receives a wireless signal from an infrastructure element, e.g., an eNodeB, indicating a configured GP, e.g., information indicating the configured GP in an SSF of a LTE TDD system.

In some embodiments, the wireless communications device receives a wireless broadcast signal from an infrastructure element, e.g., an eNodeB, which communicates information communicating: the maximum propagation delay value $T_C$ corresponding to the WAN, the maximum propagation delay value $T_D$ corresponding to the device to device signaling, and the GP information.

Operation proceeds from step 209 to step 212. In step 212 the wireless communications device determines a device to device transmission timing offset relative to a point in time in a recurring wide area network timing structure. In some embodiments, the point in time in a recurring timing structure is a point in time in the recurring timing structure observed at the wireless communications device. In some embodiments, the point in time is the end of arrived DwPTS, and the recurring WAN timing structure is an LTE timing structure including SSF periods.

In various embodiments, the device to device transmission timing offset is further determined as a function of a duration of an On-Off mask. In some such embodiments, the duration of an On-Off mask is the duration of an On-Off mask used in the wide area network system. In one exemplary embodiment, the duration of the On-Off mask is 20 micro-sec. In some embodiments, the device to device transmission timing offset is D2D Tx offset referred to as X. In some embodiments, the duration of the On-OFF mask is referred to as delta 1. In various embodiments delta 1 is a predetermined time such as, e.g., a transition period, specified by a communications standard with which WAN communications devices comply, for a wireless communications device to switch from receive to transmit. In some embodiments, delta 1 is a time for the wireless communications device to switch from receive to transmit, i.e., from LTE access downlink to D2D transmit, which impacts D2D Tx window starting time. In some embodiments, the device to device transmission timing offset is determined in accordance with the equation: X = Max (delta 1, Tc). Operation proceeds from step 212 to step 214.

In step 214 the wireless communications device stores the determined device to device transmission timing offset indicating a device to device transmission timing offset relative to a point in a recurring wide area network timing structure. Operation proceeds from step 214 to step 216.

In step 216 the wireless communications device determines a device to device receiver timing offset indicating a timing offset relative to said first point in time in WAN structure to be used for device to device communications from the maximum propagation delay Tc, maximum propagation delay $T_D$, and determined transmission timing offset. In some embodiments, the device to device receiver timing offset is referred to as RTLO.

In some embodiments, the device to device receiver timing offset is determined in accordance with the equation: RTLO = $T_D$ + $T_C$ + X. Operation proceeds from step 216 to step 218.

In step 218 the wireless communications device stores the determined device to device receiver timing offset indicating a device to device receiver timing offset relative to a point in a recurring wide area network timing structure. Operation proceeds from step 218 via connecting node A 220 to step 222.

In step 222 the wireless communications device determines a cyclic prefix length (CPL) to be used for device to device communications based on the maximum propagation delay $T_C$ and a maximum propagation delay $T_D$ supported for device to device communications. Step 222 includes steps 224, 226, 228, 230, 232 and 234.

In step 224 the wireless communications device determines whether or not twice the maximum propagation delay $T_C$ + the maximum propagation delay $T_D$ is less than or equal to the length of a first cyclic prefix (CP) of the WAN. In some embodiments, the first cyclic prefix of the WAN is a normal CP of the WAN. If the comparison of step 224 indicates that $2T_C$ + $T_D$ is less than or equal to the length of a first CP of the WAN, then operation proceeds from step 224 to step 226; otherwise, operation proceeds from step 224, to step 228.

In step 226 the wireless communications device sets the cyclic prefix length (CPL) to be used for device to device communications to the length of the first CP.

Returning to step 228, in step 228, the wireless communications device determines whether or not twice the maximum propagation delay $T_C$ + the maximum propagation delay $T_D$ is less than or equal to the length of a second cyclic prefix (CP) of the WAN. In some embodiments, the second CP of the WAN is an extended CP. If the comparison of step 228 indicates that $2T_C$ + $T_D$ is less than or equal to the length of a second CP of the WAN, then operation proceeds from step 228 to step 230; otherwise, operation proceeds from step 228, to step 232. In step 230 the wireless communications device sets the cyclic prefix length (CPL) to be used for device to device communications to the length of the second CP.

Returning to step 232, in step 232 the wireless communications device sets the cyclic prefix length (CPL) to be used for device to device communications to twice the length of the second CP.

Operation proceeds from step 232 to step 234. In step 234, the wireless communications device sets a subcarrier spacing to be used for device to device communication to half the subcarrier spacing used for WAN communications.

Operation proceeds from step 222 to step 235. In step 235 the wireless communications device determines a symbol length (SL) to for device to device symbols to be used for device to device communications based on the determined CPL. In some embodiments, there is a known or pre-determined relationship between the CPL and the symbol length (SL). In such an embodiment, once the CPL is determined, the wireless communications determines the SL for device to device symbols using the known or pre-determined relationship.

Operation proceeds from step 235 to step 236. In step 236 the wireless communications device determines the number of symbol time periods in a device to device time period used for device to device communications from the size of said time period, the maximum propagation delay Tc, the maximum propagation delay $T_D$ and a symbol length to be used for device to device communications. In some embodiments, the number of symbol time periods in a device to device time period used for device to device communications is referred to as L. In some such embodiments, the number of symbol time periods in a device to device time period used for device to device communications is determined in accordance with the equation:

$$L = \lfloor (G - X \ 2*T_C - \text{delta2} - T_D)/SL \rfloor,$$

where G corresponds to the duration of the configured GP, e.g., in SSF of a LTE TDD system, where SL is the symbol length corresponding to the CPL, and where delta 2 is an On-Off mask for a wireless communications device to switch from receive to transmit, i.e., from D2D receive to LTE access uplink transmit, which impacts D2D receive window end timing in GP.

Operation proceeds from step 236 to step 238 in which the wireless communications device transmits a device to device signal in accordance with the determined device to device receiver timing offset and the determined CPL. Operation proceeds from step 238 to step 240 in which the wireless communications device receives a device to device signal in accordance with the determined device to device receiver timing offset and determined CPL. Exemplary device to device signals include device to device discovery signals, sometimes referred to as peer discovery signals, device to device traffic control signals, and device to device traffic signals. In some embodiments, steps 238 and 240 are performed within different SSFs. In some embodiments, steps 238 and 240 are performed within the same SSF. Operation proceeds from step 240 to step 238.

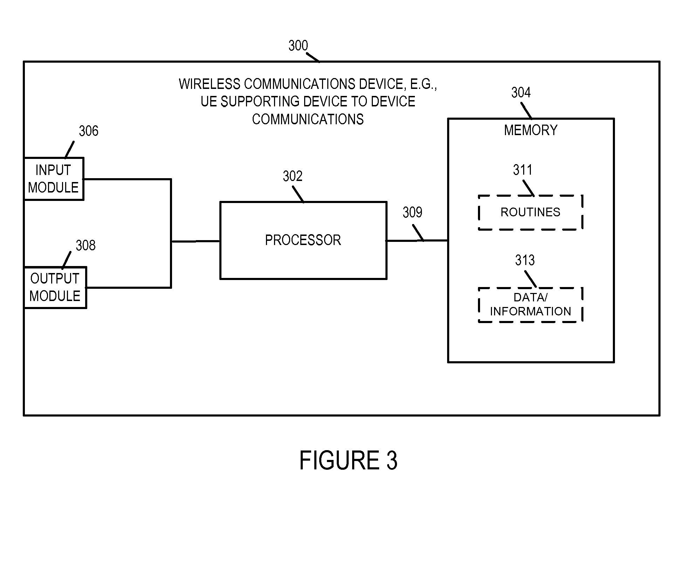

Figure 3 is a drawing of an exemplary wireless communications device 300 in accordance with an exemplary embodiment. Exemplary wireless communications device 300 is, e.g., one of the wireless communications devices (106, 108, 110, 112, 114, ... 116) of system 100 of Figure 1. Wireless communications device 300 is, e.g., a wireless communications device which supports device to device communications. In some embodiments, wireless communications device 300 is a UE supporting device to device capability. Exemplary wireless communications device 300 may, and sometimes does, implement a method in accordance with flowchart 200 of Figure 2.

Wireless communications device 300 includes a processor 302 and memory 304 coupled together via a bus 309 over which the various elements (302, 304) may interchange data and information. Wireless communications device 300 further includes an input module 306 and an output module 308 which may be coupled to processor 302 as shown. However, in some embodiments, the input module 306 and output module 308 are located internal to the processor 302. Input module 306 can receive input signals. Input module 306 can, and in some embodiments does, include a wireless receiver and/or a wired or optical input interface for receiving input. Output module 308 may include, and in some embodiments does include, a wireless transmitter and/or a wired or optical output interface for transmitting output. In some embodiments, memory 304 includes routines 311 and data/information 313.

In various embodiments, processor 302 is configured to: receive information indicating a maximum propagation delay $T_C$ for a wide area network system, e.g., an LTE system; and determine a device to device transmission timing offset, e.g., D2D Tx offset: X, relative to a point in time, e.g., end of arrived DwPTS, in a recurring wide area network timing structure, e.g., LTE timing structure including SSF periods. In some embodiments, processor 302 is further configured to determine the device to device transmission timing offset based on the duration, e.g., delta 1, of an On-Off mask, e.g. the duration of an On-Off mask used in the wide area network system. In some embodiments, the maximum propagation delay $T_C$ corresponds to maximum propagation delay for the largest LTE TDD cell radius supported in a WAN system.

In some embodiments, processor 302 is configured to: receive information indicating a maximum propagation delay $T_C$ includes receiving a wireless signal from a infrastructure element, e.g., an eNodeB, indicating said maximum propagation delay Tc.

In various embodiments, processor 302 is configured to receive GP information, e.g., information indicating the configured GP in an SSF of a LTE TDD system. The received GP information includes, e.g., information indicating a duration G of the GP. In various embodiments processor 302 is configured to receive a wireless signal from an infrastructure element, e.g., an eNodeB, indicating a configured GP, e.g., information indicating the configured GP in an SSF of a LTE TDD system.

In some embodiments, processor 302 is configured to receive a wireless broadcast signal from an infrastructure element, e.g., an eNodeB, which communicates information communicating: the maximum propagation delay value $T_C$ corresponding to the WAN, the maximum propagation delay value $T_D$ corresponding to the device to device signaling, and the GP information.

In various embodiments, processor 302 is further configured to: determine a cyclic prefix length (CPL) to be used for device to device communication based on said maximum propagation delay $T_C$ and a maximum propagation delay $T_D$ supported for device to device communications. In some such embodiments, processor 302 is further configured to: receive information indicating said maximum propagation delay $T_D$ supported for device to device communications from a wide area network infrastructure element. In some embodiments the received information indicating TD is received in a wireless broadcast signal from an eNodeB. In some such embodiments, the broadcast signal from the eNodeB communicates both $T_D$ and Tc.

Processor 302, in various embodiments, is further configured to set said CPL to the length of a first CP, e.g. a normal CP, used in the WAN if it is determined that $2T_C+T_D$ is less than or equal to length of said first CP as part of being configured to determine a cyclic prefix length (CPL). In some such embodiments, processor 302 is further configured to set said CPL to the length of a second CP, an extended CP, used in the WAN if it is determined that $(2T_C+T_D)$ is not less than or equal to the length of said first CP but is less than or equal to the length of the second CP, as part of being configured to determine a cyclic prefix length (CPL). In some such embodiments, processor 302 is further configured to set said CPL to twice the length of the second CP length, e.g., extended CP length, when said CPL is not set to the first CP length or the second CP length, as part of being configured to determine a cyclic prefix length (CPL). In some such embodiments, processor 302 is further configured to set a sub-carrier spacing to be used for device to device communication to half the subcarrier spacing used for WAN communication when said CPL is set to twice the second CP length.

In some embodiments, processor 302 is configured to: determine a device to device receiver timing offset, e.g., an RTLO value, indicating a timing offset relative to said point in time in said WAN timing structure to be used for device to device communication from maximum propagation delay Tc, maximum propagation delay $T_D$, and said determined device to device transmission timing offset. In some such embodiments, processor 302 is further configured to determine the number of symbol time periods in a device to device (D2D) time period, e.g., an SSF, used for device to device (D2D) communications from the size of said time period, the maximum propagation delay Tc, the maximum propagation delay $T_D$, and a symbol length to be used for device to device (D2D) symbols.

In some embodiments, processor 302 is configured to store the determined device to device transmission timing offset, e.g., D2D Tx offset: X, indicating a device to device transmission timing offset relative to a point in a recurring wide area network, e.g., LTE network, timing structure; and store the device to device receiver timing offset, e.g., D2D Rx RTLO, indicating a device to device receiver timing offset relative to said point in a recurring wide area network, e.g., LTE network, timing structure.

In various embodiments, processor 302 is configured to utilize the determined device to device transmission timing offset, e.g., X, device to device receiver timing offset, e.g., RTLO, determined cyclic prefix length (CPL) for D2D symbols, and/or the determined transmission duration, e.g., determined number of D2D symbols L, in the generation, transmission, reception and/or recovery of device to device to device signals, e.g., during a GP of an SSF in LTE TDD. In various embodiments, processor 302 is configured to transmit a device to device signal in accordance with the determined device to device receiver timing offset and the determined CPL. In various embodiments, processor 302 is configured to receive a device to device signal in accordance with the determined device to device receiver timing offset and determined CPL.

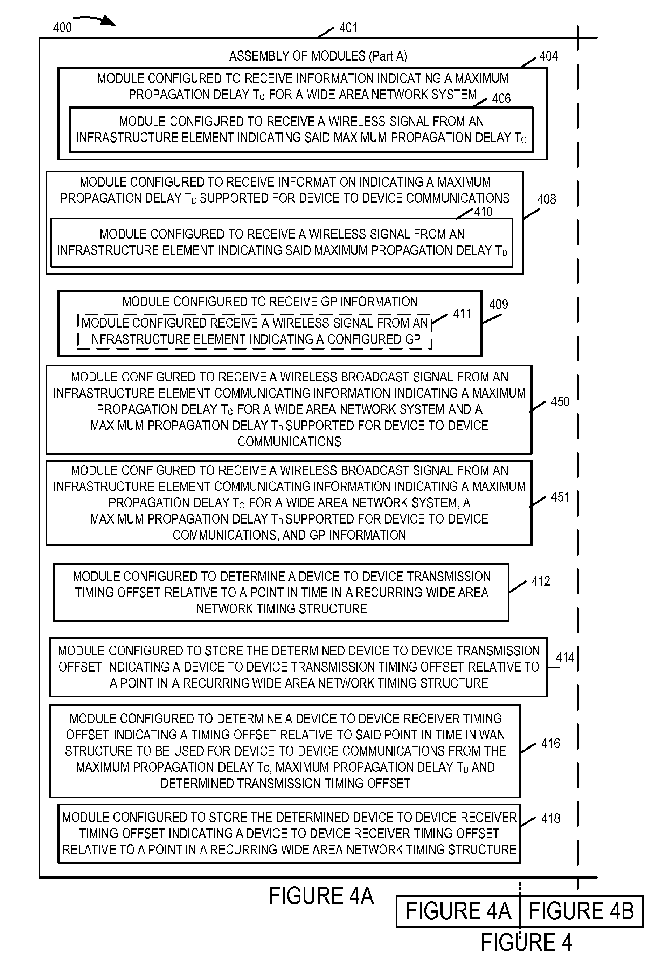

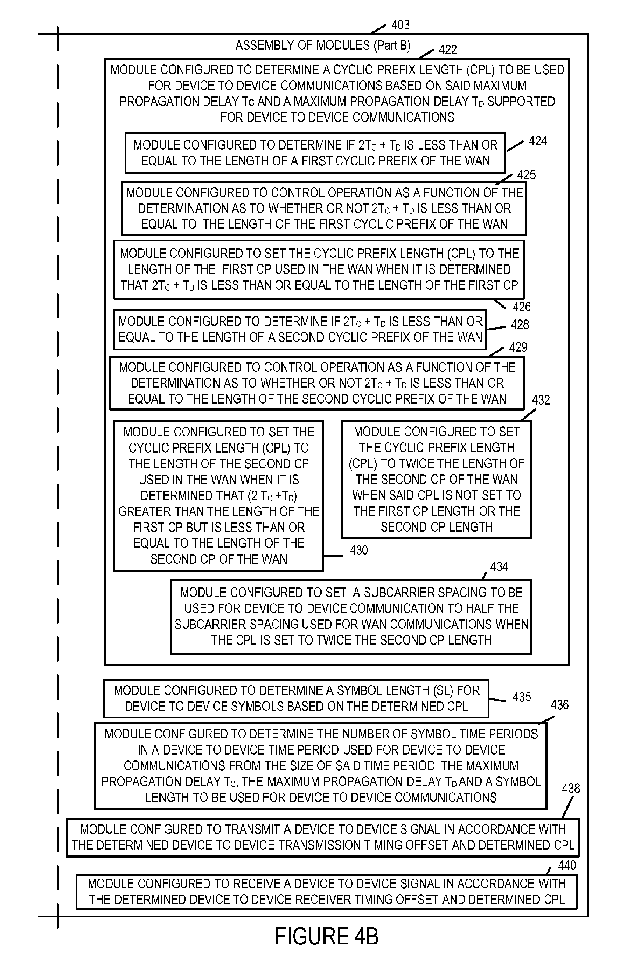

Figure 4 is an assembly of modules 400 which can, and in some embodiments is, used in the exemplary wireless communications device 300 illustrated in Figure 3. The modules in the assembly 400 can be implemented in hardware within the processor 302 of Figure 3, e.g., as individual circuits. Alternatively, the modules may be implemented in software and stored in the memory 304 of wireless communications device 300 shown in Figure 3. In some such embodiments, the assembly of modules 400 is included in routines 311 of memory 304 of device 300 of Figure 3. While shown in the Figure 3 embodiment as a single processor, e.g., computer, it should be appreciated that the processor 302 may be implemented as one or more processors, e.g., computers. When implemented in software the modules include code, which when executed by the processor, configure the processor, e.g., computer, 302 to implement the function corresponding to the module. In some embodiments, processor 302 is configured to implement each of the modules of the assembly of modules 400. In embodiments where the assembly of modules 400 is stored in the memory 304, the memory 304 is a computer program product comprising a computer readable medium, e.g., a non-transitory computer readable medium, comprising code, e.g., individual code for each module, for causing at least one computer, e.g., processor 302, to implement the functions to which the modules correspond.

Completely hardware based or completely software based modules may be used. However, it should be appreciated that any combination of software and hardware (e.g., circuit implemented) modules may be used to implement the functions. As should be appreciated, the modules illustrated in Figure 4 control and/or configure the wireless communications device 300 or elements therein such as the processor 302, to perform the functions of the corresponding steps illustrated and/or described in the method of flowchart 200 of Figure 2.

Assembly of modules 400, comprising the combination of part A 401 and part B 403, includes a module 404 configured to receive information indicating a maximum propagation delay $T_C$ for a wide area network system, a module 408 configured to receive information indicating a maximum propagation delay $T_D$ supported for device to device communications, a module 409 configured to receive GP information, e.g., GP information corresponding to a configured SSF of a LTE TDD system, a module 412 configured to determine a device to device transmission timing offset relative to a point in time in a recurring wide area network timing structure, a module 414 configured to store the determined device to device transmission timing offset indicating a device to device transmission timing offset relative to a point in the recurring wide area network timing structure, a module 416 configured to determine a device to device receiver timing offset indicating a timing offset relative to said point in time in the WAN structure to be used for device to device communications from the maximum propagation delay $T_C$ corresponding to the WAN, the maximum propagation delay $T_D$ corresponding to device to device communications, and the determined transmission timing offset, and a module 418 configured to store the determined device to device receiver timing offset indicating a device to device receiver timing offset relative to a point in a recurring wide area network timing structure. In various embodiments, module 412 is further configured to determine the device to device transmission timing offset based on the duration on an On-Off mask. In some embodiments, the duration of the On-Off mask is the duration of an On-Off mask used in the wide area network system.

Module 404 includes a module 406 configured to receive a wireless signal from an infrastructure element indicating said maximum propagation delay Tc. Module 408 includes a module 410 configured to receive a wireless signal from an infrastructure element indicating said maximum propagation delay $T_D$. Module 409 includes a module 411 configured to receive a wireless signal from an infrastructure element indicating a configured GP, e.g., the configured GP in an SSF of an LTE TDD system.

Assembly of modules 400 further includes a module 450 configured to receive a wireless broadcast signal from an infrastructure element communicating information indicating a maximum propagation delay $T_C$ for a wide area network system, a maximum propagation delay $T_D$ supported for device to device communications and a module 451 configured to receive a wireless broadcast signal from an infrastructure element communicating information indicating a maximum propagation delay $T_C$ for a wide area network system, a maximum propagation delay $T_D$ supported for device to device communications, and GP information.

Assembly of modules 400 further includes a module 422 configured to determine a cyclic prefix length (CPL) to be used for device to device communications based on said maximum propagation delay $T_C$ and a maximum propagation delay $T_D$ supported for device to device communications, a module 435 configured to determine a symbol length (SL) for device to device symbols for device to device communications based on the determined CPL, and a module 436 configured to determine the number of symbol time periods in a device to device time period used for device to device communications from the size of said time period, the maximum propagation delay $T_C$ for WAN, the maximum propagation delay for device to device communications $T_D$, and a symbol length to be used for device to device communications. Module 422 configured to determine a cyclic prefix length includes a module 424 configured to determine if two time the maximum propagation delay $T_C$ + the maximum propagation delay $T_D$ is less than or equal to the length of a first cyclic prefix (CP) of the WAN, a module 425 configured to control operation as function of the determination as to whether or not 2Tc + $T_D$ is less than or equal to the length of the first cyclic prefix of the WAN, a module 426 configured to set the cyclic prefix length (CPL) to the length of the first CP used in the WAN when it is determined that $2T_C$ + $T_D$ is less than or equal to the length of the first CP.

Module 422 further includes a module 428 configured to determine if 2Tc + $T_D$ is less than the length of a second cyclic prefix (CP) of the WAN, a module 429 configured to control operation as a function of the determination as to whether or not 2Tc + $T_D$ is less than or equal to the length of the second cyclic prefix of the WAN, and a module 430 configured to set the cyclic prefix length (CPL) to the length of the second CP used in the WAN when it is determined that $2T_C$ + $T_D$ is not less than or equal to the length of the first CP but is less than or equal to the length of the second CP of the WAN. Module 422 further includes a module 432 configured to set the cyclic prefix length (CPL) to twice the length of the second CP of the WAN when said CPL is not set to the first CP length or the second CP length, and a module 434 configured to set a subcarrier spacing to be used for device to device communications to half the subcarrier spacing used for WAN communications when the CPL is set to twice the second CP length.

In some embodiments, module 412 determines the device to device to device transmission timing offset (X) in accordance with the equation: $X = Max (delta 1, T_C)$.

In some embodiments, module 416 determines the device to device receiver timing offset (RTLO) in accordance with the equation: $RTLO = T_D + Tc + X$.

In some such embodiments, module 436 determines the number of symbol time periods in a device to device time period used for device to device communications (L) in accordance with the equation:

$$L = \lfloor (G - X - 2*T_C - \text{delta } 2 - T_D))/SL \rfloor,$$

where G corresponds to the duration of the configured GP, e.g., in SSF of a LTE TDD system, where SL is the symbol length corresponding to the CPL, and where delta 2 is an On-Off mask for a wireless communications device to switch from receive to transmit, i.e., from D2D receive to LTE access uplink transmit, which impacts D2D receive window end timing in GP.

Assembly of modules 400 further includes a module 438 configured to transmit a device to device signal in accordance with the determined device to device transmission timing offset and the determined CPL, and a module 440 configured to receive a device to device signal in accordance with the determined device to device receiver timing offset and the determined CPL.

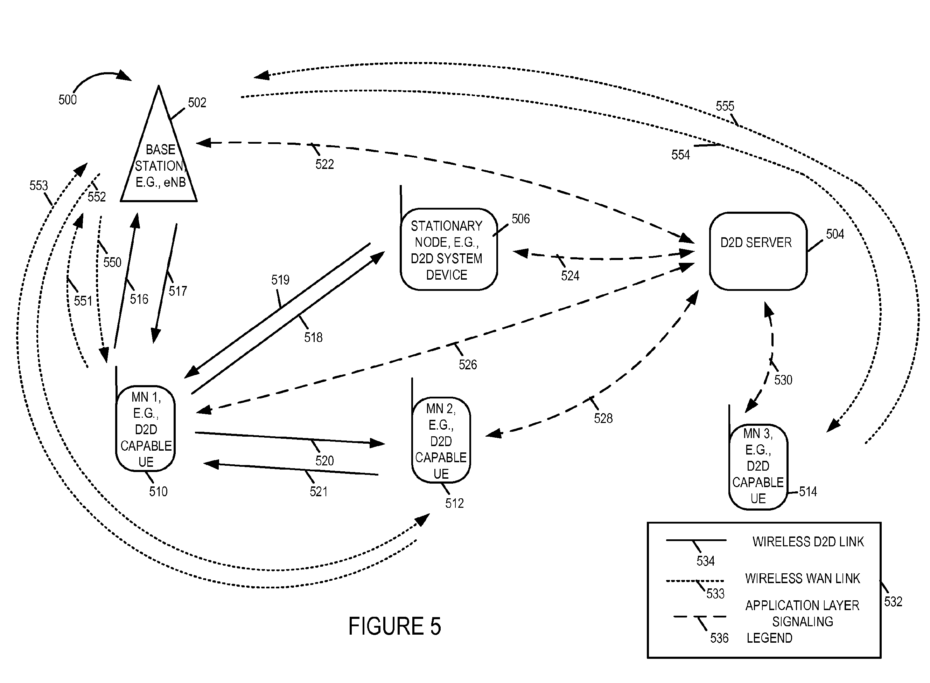

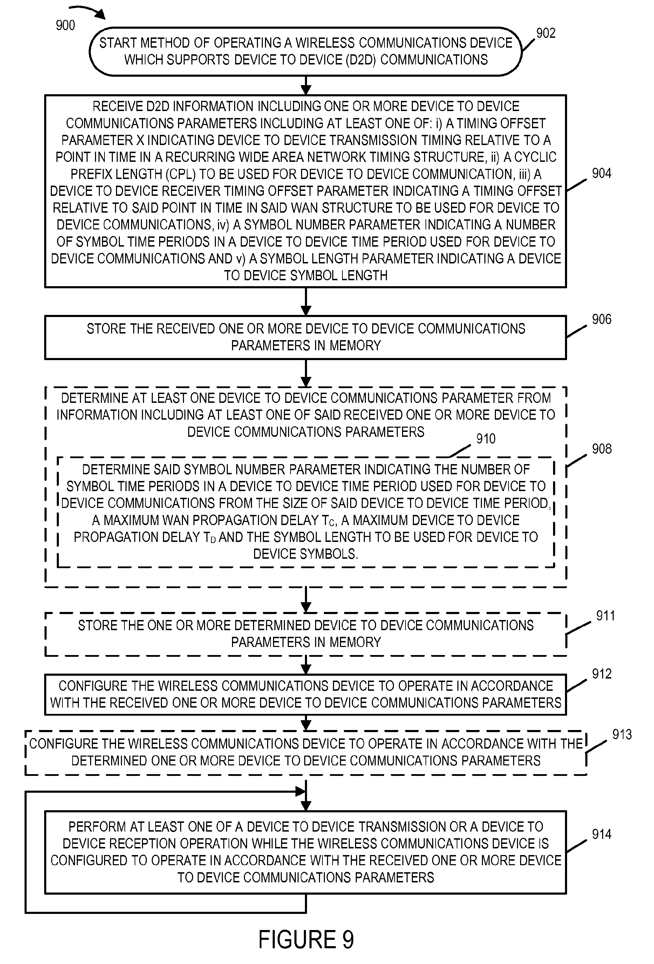

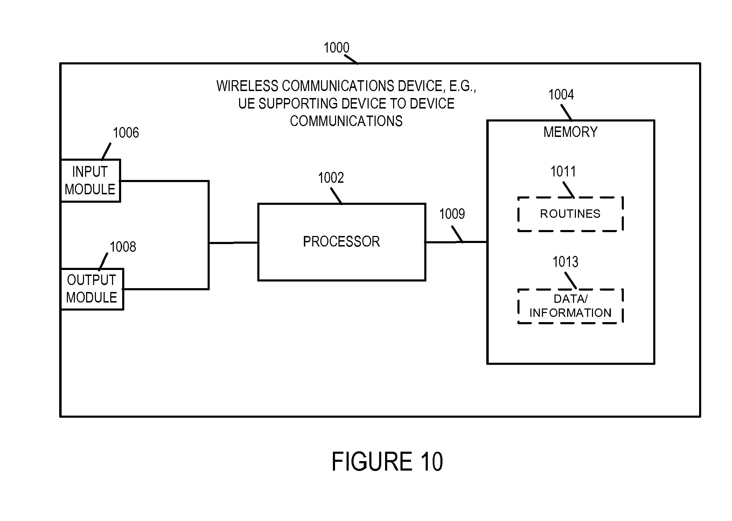

Figure 5 illustrates an exemplary communications system 500 in accordance with an exemplary embodiment. Exemplary system 500 includes a base station 502, e.g., an eNodeB device, and a D2D server 504, and a stationary node supporting D2D communications 506, e.g., a D2D system device. The various devices (502, 504, 506) are coupled together via a backhaul network. Exemplary system 500 also includes a plurality of MNs supporting WAN and D2D communications (MN 1 510, MN 2 512, MN 3 514). In various embodiments, the MNs (510, 512, 514) may implement a method in accordance with flowchart 200 of Figure 2, and/or flowchart 900 of Figure 9 and /or be implemented in accordance with device 300 of Figure 3 and/or device 1000 of Figure 10.

Legend 532 indicates: that wireless D2D links are indicated by solid lines as represented by solid line 534, that wireless WAN links are indicated by dotted lines as represented by dotted line 533, and that exemplary application layer signaling is indicated by dashed lines as represented by dashed line 536.

The D2D server 504 communicates application layer signaling (522, 524, 526, 528, 530) to the various devices (502, 506, 510, 512, 514), respectively. In some embodiments, the application layer signaling communicates one or more or all of: a information indicating a maximum propagation delay $T_C$ for a wide area network system, information indicating a maximum propagation delay $T_D$ supported for peer to peer communications, and information indicating GP information, e.g., information indicating the configured GP in SSF of a LTE TDD system. The application layer signaling may be communicated by backhaul network signaling, downlink WAN signaling, or device to device signaling or any combination of backhaul network signaling, WAN signaling and device to device signaling. This communicated information can be, and sometimes is, used to derive one or more or all of: a device to device receiver timing offset, a device to device transmission timing offset, a cyclic prefix length for device to device communications, and the number of symbol time periods in a device to device time period used for device to device communications.

Base station 502 transmits downlink signals to MNs (510, 512, 514) via WAN links (550, 552, 554), respectively. MNs (510, 512, 514) transmit uplink signals to BS 502 via WAN links (551, 553, 555), respectively.

In this example MN 1 has wireless D2D links (516, 517) with BS 502 via which the devices (510, 502) may communicate device to device signals. MN 1 has wireless D2D links (518, 519) with node 506 via which the devices (510, 506) may communicate device to device signals. MN 1 has wireless D2D links (520, 521) with MN 512 via which the devices (510, 512) may communicate device to device signals. Exemplary device to device signals include device to device discovery signals, device to device traffic control signals, and device to device traffic signals. In various embodiments, the device to device signals are communicated during portions of GP intervals in SSF of a LTE TDD system, e.g., in accordance with timing information and configuration information communicated from D2D server and/or derived from information communicated from the D2D server 504.

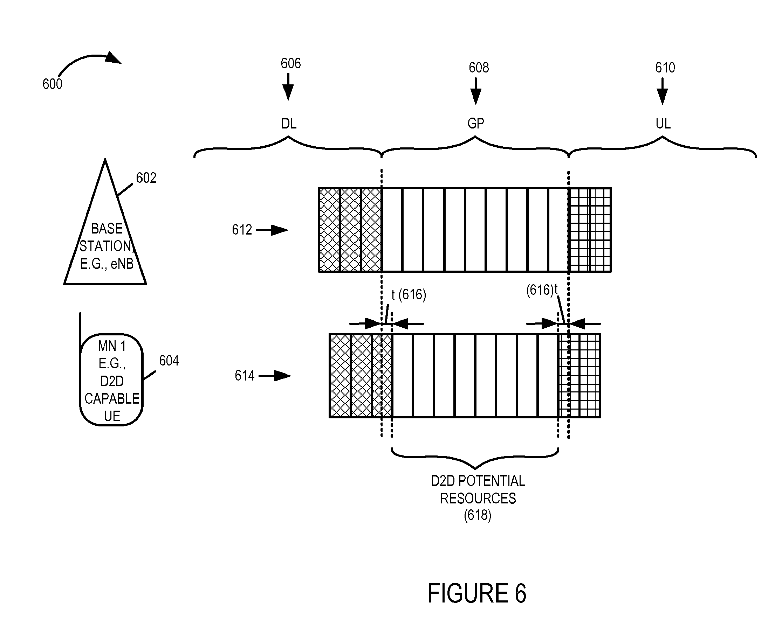

Figure 6 is a drawing 600 illustrating an exemplary base station 602, e.g., an eNodeB device, and an exemplary MN 1 604, e.g., a D2D capable UE. Drawing 600 also illustrates that a Special Sub-Frame (SSF) in LTE TDD includes a downlink portion 606, a GP portion 608, and an uplink portion 610. Drawing 612 indicates three downlink symbols, e.g., DwPTS signals transmitted by the base station 602, followed by nine unused symbols, followed by two uplink symbols, e.g., UpPTS signals, from the perspective of the base station 602. Drawing 614 indicates timing from the perspective of a MN. Note that the downlink signals are received at the MN with a propagation delay of t 616. Note also that the uplink signals are transmitted by the MN with a timing advance of 616 so that it arrives at the BS 602 in accordance with BS symbol timing. The potential resources available of D2D communications 618 in the GP 608 of the SSF correspond to the time interval of the G - 2t, where G is the duration of GP.

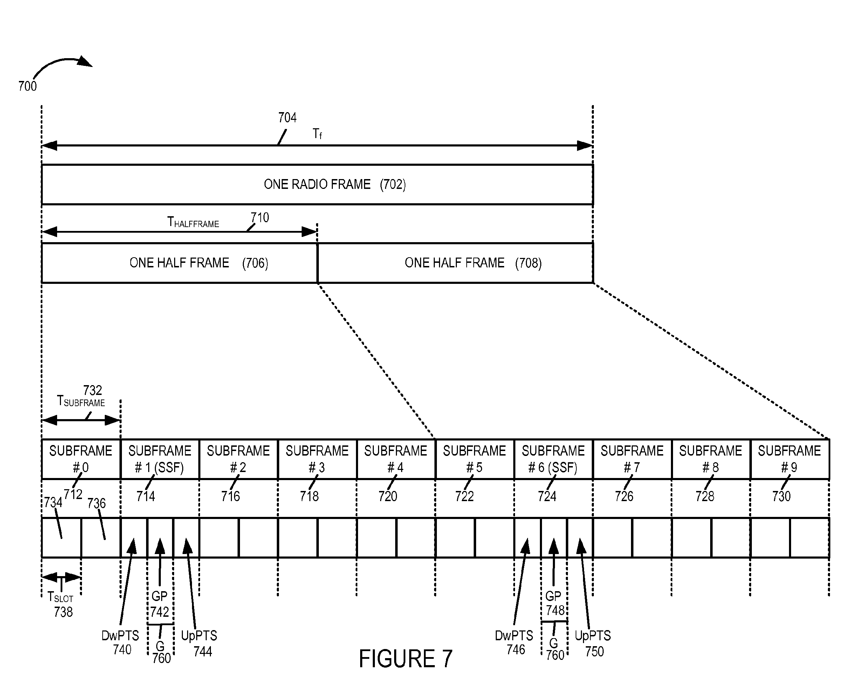

Figure 7 illustrates a drawing 700 of an exemplary recurring LTE TDD timing structure. One radio frame 702 corresponds to a time interval $T_f$ 704. Radio frame 702 includes half radio frames (706, 708). Each half radio frame corresponds to a time interval $T_{Halfframe}$ 710. Radio frame 702 includes 10 subframes (subrame #0 712, subframe #1 714, subframe #2 716, subframe #3 718, subframe #4 720, subframe #5 722, subframe #6 724, subframe #7 726, subframe #8 728, subframe #9 730). Each subframe corresponds to time interval $T_{subframe}$ 732. Subframes which are not SSFs include a first and second slot. For example, subframe #0 includes slot 734 and slot 736. Each slot corresponds to a time interval $T_{slot}$ 738.

In this example, subframe #1 714 and subframe #6 724 are special sub-frames. In some other embodiments, the system is configured such that subframe #1 is a SSF while subframe #6 is not a SSF. Each SSF includes a DwPTs portion, a GP portion, and an UpPTS portion. Subframe #1 714, which is a SSF includes DwPTS portion 740, GP portion 742, and UpPTS portion 744. Subframe #6 724, which is a SSF includes DwPTS portion 746, GP portion 748, and UpPTS portion 750. The duration of GP 742 is G 760, and the duration of GP 748 is G 760.

Portions of the GP portions (742, 748) may be, and sometimes are used for device to device communications. There is a potential available resource for device to device communications, which will not interfere with the WAN signaling, during the time of the GP reduced by twice the maximum propagation delay for the WAN between the base station and a mobile.

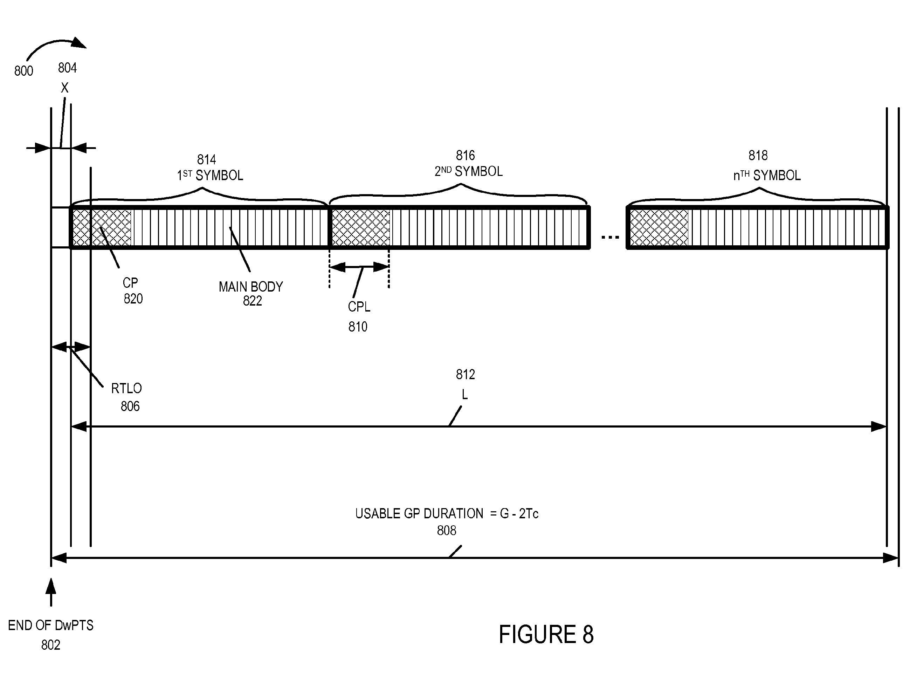

Figure 8 is a drawing 800 illustrating exemplary timing and exemplary device symbols in accordance with an exemplary embodiment. Reference time point 802 is the end of DwPTS as viewed at a wireless communications device supporting device to device communications, which is receiving the DwPTS. There is a useable GP, having a useable GP duration 808 extending from the DwPTS reference point. The useable GP duration is the duration of the configured GP, e.g. configured GP in SSF for the LTE TDD system, minus 2Tc, where Tc corresponds to the maximum propagation delay for the WAN system. There is a device to device transmission timing offset X 804 which is measured from the end of the arrived DwPTS 802. There is a device to device receiver timing offset RTLO 806 which is measured from the end of the arrived DwPTS 802. There is a transmission duration L 812 which is an integer number of device to device symbols. In this example, there are N symbols ($1^{st}$ symbol 814, $2^{nd}$ symbol 816, ..., nth symbol 818). Each device to device symbol includes a cyclic prefix portion and a main body portion. For example, exemplary $1^{st}$ device to device symbol 814 includes CP 820 and main body 822. Each cyclic prefix of a device to device symbol has a cyclic prefix length CPL 810. In some embodiments, the values for the parameters X, RTLO, CPL, and L are determined by a wireless communications device in accordance with the method of flowchart 200 of Figure 2.

Figure 9 is a flowchart 900 of an exemplary method of operating a wireless communications device which supports device to device (D2D) communication, e.g., a UE device which supports D2D communications, in accordance with various exemplary embodiments. Operation starts in step 902, where the wireless communications device is powered on and initialized. Operation proceeds from start step 902 to step 904. In step 904, the wireless communications device receives device to device (D2D) information including one or more of: i) a timing offset parameter X indicating device to device transmission timing relative to a point in time in a recurring wide area network timing structure, ii) a cyclic prefix length (CPL) to be used for device to device communication, iii) a device to device receiver timing offset parameter indicating a timing offset relative to said point in time in said WAN structure to be used for device to device communications, iv) a symbol number parameter indicating a number of symbol time periods in a device to device time period used for device to device communications, and v) a symbol length parameter indicating a device to device symbol length.

In some embodiments, the received D2D information is received from an infrastructure system or infrastructure element such as a base station, e.g., an eNodeB or a server node. In various embodiments X is the D2D transmission timing offset parameter. In some embodiments, the point in time is the end of the arrived DwPTS. In some embodiments, the recurring wide area network timing structure is an LTE TDD timing structure including SSF periods. In some embodiments, the device receiver timing offset parameter is RTLO. In some embodiments the time period used for device to device communications is a portion of a GP within a SFF.

In some embodiments, said one or more received device to device parameters includes at least two of the following parameters: i) a timing offset parameter X indicating device to device transmission timing, e.g., D2D Tx offset: X, relative to a point in time, e.g., end of arrived DwPTS, in a recurring wide area network timing structure, e.g., LTE timing structure including SSF periods, ii) a cyclic prefix length (CPL) to be used for device to device communication, iii) a device to device receiver timing offset parameter , e.g., RTLO, indicating a timing offset relative to said point in time, e.g., end of arrived DwPTS, in said WAN timing structure to be used for device to device communication; iv) a symbol number parameter indicating a number of symbol time periods in a device to device (D2D) time period (SSF) used for device to device (D2D) communications, and v) a symbol length parameter indicating a device to device symbol length. In some embodiments, said one or more received device to device parameters includes at least three of the following parameters: i) a timing offset parameter X indicating device to device transmission timing , e.g., D2D Tx offset: X, relative to a point in time, e.g., end of arrived DwPTS, in a recurring wide area network timing structure, e.g., LTE timing structure including SSF periods, ii) a cyclic prefix length (CPL) to be used for device to device communication, iii) a device to device receiver timing offset parameter, e.g., RTLO, indicating a timing offset relative to said point in time, e.g., end of arrived DwPTS, in said WAN timing structure to be used for device to device communication; iv) a symbol number parameter indicating a number of symbol time periods in a device to device (D2D) time period, e.g., portion of a GP within an SSF, used for device to device (D2D) communications, and v) a symbol length parameter indicating a device to device symbol length.

Operation proceeds from step 904 to step 906. In step 906 the wireless communications device stores the received one or more device to device communications parameters in memory. In some embodiments, operation proceeds from step 906 to step 912. In some other embodiments, operation proceeds from step 906 to step 908.

In step 908 the wireless communications device determines at least one device to device communications parameter from information including at least one of said received one or more device to device communications parameters. In some embodiments, step 908 includes step 910 in which the wireless communications device determines said symbol number parameter indicating the number of symbol time periods in a device to device time period from the size of said device to device time period, a maximum WAN propagation delay Tc, and a symbol length to be used for device to device symbols. In some embodiments, the wireless communications device determines one or more of: said timing offset parameter X indicating device to device transmission timing relative to a point in time in a recurring wide area network timing structure, ii) said cyclic prefix length (CPL) to be used for device to device communication, iii) said device to device receiver timing offset parameter indicating a timing offset relative to said point in time in said WAN structure to be used for device to device communications and iv) said symbol length parameter indicating a device to device symbol length.

Operation proceeds from step 908 to step 911. In step 911 the wireless communications device stores one or more determined device to device communication parameters. Operation proceeds from step 911 to step 912.

In step 912 the wireless communications device configures the wireless communications device to operate in accordance with the received one or more device to device communications parameters. In some embodiments, operation proceeds from step 912 to step 914. In some other embodiments, operation proceeds from step 912 to step 913. In step 913 the wireless communications device configures the wireless communications device to operate in accordance with the determined one or more device to device communications parameters. Operation proceeds from step 913 to step 914.

In step 914 the wireless communications device performs at least one of a device to device transmission or device to device reception operation while the wireless communications device configured to operate in accordance with the received one or device to device communications parameters. In some embodiments, the at least one of a device transmission or device to device reception operation is performed while the wireless communications device is configured to operate with a combination of received device to device communications parameters and determined device to device communications parameters.

Step 914 may be, and sometimes is, repeated during one or more device to device transmission time intervals, e.g., during multiple SSFs in the LTE TDD recurring timing structure.

In various embodiments, the device to device transmission timing offset is parameter X, and X = Max (delta 1, Tc). In various embodiments delta 1 is a predetermined time such as, e.g., a transition period, specified by a communications standard with which WAN communications devices comply, for a wireless communications device to switch from receive to transmit. In some embodiments, delta 1 is a time for the wireless communications device to switch from receive to transmit, i.e., from LTE access downlink to D2D transmit, which impacts D2D Tx window starting time. Parameter X can be received or determined by the wireless communications device.

In various embodiments, the device to device receive timing offset is RTLO, and RTLO = $T_D$ + Tc + X. Parameter RTLO can be received or determined by the wireless communications device.

In various embodiments, the device to device cyclic prefix length (CPL) is one of the length of normal CP of the WAN, or the length of an extended CPL of the WAN, or the length of twice the length of the extended CPL of the WAN. In some such embodiments, the CPL for device to device communications is set in accordance with step 222 of flowchart 200 of Figure 2. Parameter CPL can be received or determined by the wireless communications device. In various embodiments, the D2D symbol length parameter, e.g., SL, is based on the CPL, e.g., in accordance with a known or predetermined relationship. Parameter CPL can be received or determined by the wireless communications device.

In various embodiments, the symbol number parameter is L, and L = L (G - X 2*$T_C$ - delta2 -$T_D$)/SL⌋, where G corresponds to the duration of the configured GP, e.g., in SSF of a LTE TDD system, where SL is the symbol length corresponding to the CPL, and where delta 2 is an On-Off mask for a wireless communications device to switch from receive to transmit, i.e., from D2D receive to LTE access uplink transmit, which impacts D2D receive window end timing in GP.

Figure 10 is a drawing of an exemplary wireless communications device 1000 in accordance with an exemplary embodiment. Exemplary wireless communications device 1000 is, e.g., one of the wireless communications devices (106, 108, 110, 112, 114, ... 116) of system 100 of Figure 1. Wireless communications device 1000 is, e.g., a wireless communications device which supports device to device communications. In some embodiments, wireless communications device 1000 is a UE supporting device to device capability. Exemplary wireless communications device 1000 may, and sometimes does, implement a method in accordance with flowchart 900 of Figure 9. Wireless communications device 1000 includes a processor 1002 and memory 1004 coupled together via a bus 1009 over which the various elements (1002, 1004) may interchange data and information. Wireless communications device 1000 further includes an input module 1006 and an output module 1008 which may be coupled to processor 1002 as shown. However, in some embodiments, the input module 1006 and output module 1008 are located internal to the processor 1002. Input module 1006 can receive input signals. Input module 1006 can, and in some embodiments does, include a wireless receiver and/or a wired or optical input interface for receiving input. Output module 1008 may include, and in some embodiments does include, a wireless transmitter and/or a wired or optical output interface for transmitting output. In some embodiments, memory 1004 includes routines 1011 and data/information 1013.

In various embodiments, processor 1002 is

configured to: receive, e.g., from an infrastructure element such as a base station or server, D2D information including one or more device to device communication parameters, said one or more device to device communication parameters including at least one of: i) a timing offset parameter X indicating device to device transmission timing, e.g., D2D Tx offset: X, relative to a point in time, e.g., end of arrived DwPTS, in a recurring wide area network (WAN) timing structure, e.g., LTE timing structure including SSF periods, ii) a cyclic prefix length (CPL) to be used for device to device communication, iii) a device to device receiver timing offset parameter, e.g., RTLO, indicating a timing offset relative to said point in time, e.g., end of arrived DwPTS, in said WAN timing structure to be used for device to device communication; iv) a symbol number parameter indicating a number of symbol time periods in a device to device (D2D) time period, e.g., portion of a guard period (GP) of an SSF, used for device to device (D2D) communications, and v) a symbol length parameter indicating a device to device symbol length; configure the wireless communication device to operate in accordance with the received one or more device to device communications parameters; and control the wireless communications device to perform at least one of a device to device transmission or a device to device reception operation while the wireless communications device is configured to operate in accordance with the received one or more device to device communications parameters.

In some embodiments, said one or more received device to device parameters includes at least two of the following parameters: i) a timing offset parameter X indicating device to device transmission timing, e.g., D2D Tx offset: X, relative to a point in time, e.g., end of arrived DwPTS, in a recurring wide area network timing structure, e.g., an LTE timing structure including SSF periods, ii) a cyclic prefix length (CPL) to be used for device to device communication, iii) a device to device receiver timing offset parameter, e.g., a parameter RTLO, indicating a timing offset relative to said point in time, e.g., end of arrived DwPTS, in said WAN timing structure to be used for device to device communication; iv) a symbol number parameter indicating a number of symbol time periods in a device to device (D2D) time period, e.g., portion of a GP of a SSF, used for device to device (D2D) communications, and v) a symbol length parameter indicating a device to device symbol length. In various embodiments, said one or more received device to device parameters includes at least three of the following parameters: i) a timing offset parameter X indicating device to device transmission timing, e.g., D2D Tx offset: X, relative to a point in time, e.g., end of arrived DwPTS, in a recurring wide area network timing structure, e.g., LTE timing structure including SSF periods, ii) a cyclic prefix length (CPL) to be used for device to device communication, iii) a device to device receiver timing offset parameter, e.g., RTLO, indicating a timing offset relative to said point in time, e.g., end of arrived DwPTS, in said WAN timing structure to be used for device to device communication; a symbol number parameter indicating a number of symbol time periods in a device to device (D2D) time period, e.g., portion of a GP of an SSF, used for device to device (D2D) communications, and iv) a symbol length parameter indicating a device to device symbol length.

In some embodiments, processor 1002 is further configured to: store the received one or more device to device communications parameters in said memory. In various embodiments, processor 1002 is further configured to: determine at least one device to device communications parameter from information including at least one of said received one or more device to device communications parameters.

In some embodiments, the received one or more device to device communications parameters includes said symbol length parameter, e.g., SL, indicating the symbol length to be used for device to device (D2D) symbol, and processor 1002 is further configured to determine said symbol number parameter, e.g., L, indicating the number of symbol time periods in a device to device (D2D) time period (SSF) used for device to device (D2D) communications from the size of said device to device (D2D) time period, a maximum WAN propagation delay Tc, a maximum device to device (D2D) propagation delay $T_D$, and the symbol length to be used for device to device (D2D) symbols, as part of being configured to determine said at least one device to device communications parameter. In some embodiments, processor 1002 is configured to determine said device to device transmission timing offset parameter X. In various embodiments, processor 1102 is configured to determine said device to device receiver timing offset parameter, e.g., RTLO. In some embodiments, processor 1002 is configured to determine said device to device cyclic prefix length (CPL) parameter. In various embodiments, processor 1002 is configured to determine said device to device symbol length parameter, e.g., SL.

In some embodiments, processor 1002 is configured to store one or more determined device to device communications parameters in memory. In some embodiments, processor 1002 is configured to configure the wireless communications device to operate in accordance with the determined one or more device to device communications parameters.

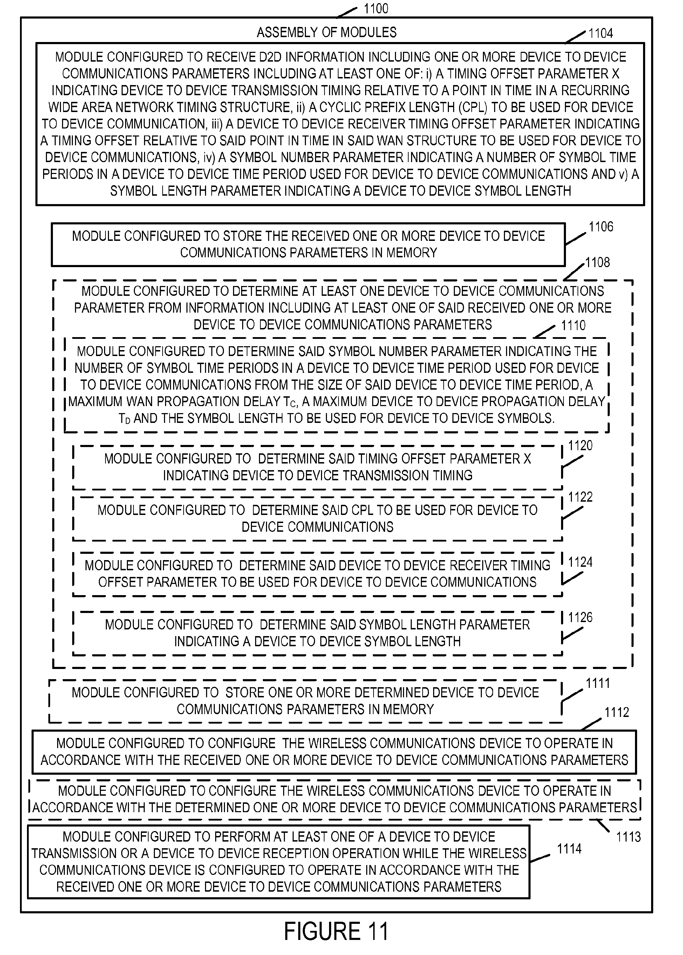

Figure 11 is an assembly of modules 1100 which can, and in some embodiments is, used in the exemplary wireless communications device 1000 illustrated in Figure 10. The modules in the assembly 1100 can be implemented in hardware within the processor 1002 of Figure 10, e.g., as individual circuits. Alternatively, the modules may be implemented in software and stored in the memory 1004 of wireless communications device 1000 shown in Figure 10. In some such embodiments, the assembly of modules 1100 is included in routines 1011 of memory 1004 of device 1000 of Figure 10. While shown in the Figure 10 embodiment as a single processor, e.g., computer, it should be appreciated that the processor 1002 may be implemented as one or more processors, e.g., computers. When implemented in software the modules include code, which when executed by the processor, configure the processor, e.g., computer, 1002 to implement the function corresponding to the module. In some embodiments, processor 1002 is configured to implement each of the modules of the assembly of modules 1100. In embodiments where the assembly of modules 1100 is stored in the memory 1004, the memory 1004 is a computer program product comprising a computer readable medium, e.g., a non-transitory computer readable medium, comprising code, e.g., individual code for each module, for causing at least one computer, e.g., processor 1002, to implement the functions to which the modules correspond.

Completely hardware based or completely software based modules may be used. However, it should be appreciated that any combination of software and hardware (e.g., circuit implemented) modules may be used to implement the functions. As should be appreciated, the modules illustrated in Figure 11 control and/or configure the wireless communications device 1000 or elements therein such as the processor 1002, to perform the functions of the corresponding steps illustrated and/or described in the method of flowchart 900 of Figure 9.

Assembly of modules 1100 includes a module 1104 configured to receive device to device (D2D) information including one or more device to device communications parameters including at least one of: i) a timing offset parameter X indicating device to device transmission timing relative to a point in time in a recurring wide area network timing structure, ii) a cyclic prefix length (CPL) to be used for device to device communications, iii) a device to device receiver timing offset parameter indicating a timing offset relative to said point in time in said WAN structure to be used for device to device communications, iv) a symbol number parameter indicating a number of symbol time periods in a device to device time period used for device to device communications and v) a symbol length parameter indicating a device to device symbol length. Assembly of modules 1100 further includes a module 1106 configured to store the received one or more device to device communications parameters in memory, a module 1112 configured to configure the wireless communications device to operate in accordance with the received one or more device to device communications parameters, and a module 1114 configured to perform at least one of a device to device transmission or device to device reception operation while the wireless communications device is configured to operate in accordance with the received one or more device to device communications parameters.

In some embodiments, said one or more received device to device parameters received includes at least two of the following parameters: i) a timing offset parameter X indicating device to device transmission timing, e.g., D2D Tx offset: X, relative to a point in time, e.g.,

end of arrived DwPTS, in a recurring wide area network timing structure, e.g., LTE timing structure including SSF periods, ii) a cyclic prefix length (CPL) to be used for device to device communication, iii) a device to device receiver timing offset parameter, e.g., RTLO, indicating a timing offset relative to said point in time, e.g., end of arrived DwPTS, in said WAN timing structure to be used for device to device communication; iv) a symbol number parameter indicating a number of symbol time periods in a device to device (D2D) time period, e.g., portion of a GP in a SSF, used for device to device (D2D) communications, and v) a symbol length parameter indicating a device to device symbol length. In some embodiments, said one or more received device to device parameters includes at least three of the following parameters: i) a timing offset parameter X indicating device to device transmission timing, D2D Tx offset: X, relative to a point in time, e.g., end of arrived DwPTS, in a recurring wide area network timing structure, e.g., LTE timing structure including SSF periods, ii) a cyclic prefix length (CPL) to be used for device to device communication, iii) a device to device receiver timing offset parameter, e.g., RTLO, indicating a timing offset relative to said point in time, e.g., end of arrived DwPTS, in said WAN timing structure to be used for device to device communication; iv) a symbol number parameter indicating a number of symbol time periods in a device to device (D2D) time period, e.g., portion of a GP of an SSF, used for device to device (D2D) communications, and iv) a symbol length parameter indicating a device to device symbol length.

In some embodiments, assembly of modules 1100 includes a module 1108 configured to determine at least one device to device communications parameter from information including at least one of said received one or more device to device communications parameters, a module 1111 configured to store one or more determined device to device communications parameters in memory and a module 1113 configured to configure the wireless communications device to operate in accordance with the determined one or more device to device communications parameters. In various embodiments, module 1108 includes one or more of: a module 1110 configured to determine said symbol number parameter indicating the number of symbol time periods in a device to device time period used for device to device communications from the size of said device to device time period, a maximum WAN propagation delay Tc, a maximum device to device propagation delay $T_D$ and the symbol length to be used for device to device symbols, a module 1120 configured to determine said timing offset parameter X indicating device to device transmission timing, a module 1122 configured to determine said CPL to be used for device to device communications, a module 1124 configured to determine said device to device receiver timing offset parameter to be used for device to device communications and a module 1126 configured to determine said symbol length parameter indicating a device to device symbol length.

Various aspects and/or features of some, but not necessarily all embodiments, are further discussed below. D2D mechanisms may use physical layer based technology for device to device discovery other than over the top (via IP). Such a technique based on LTE technology is sometimes called LTE D2D. The technique employs physically transmitted signals over LTE radio resources to identify a service as well as the identity of a UE (which can be deemed as a special service id), e.g., each of the service identification information may be encoded in the radio signals broadcasted over the air. Once a D2D UE peer successfully decodes the discovery signal, the service being discovered can be identified without necessarily having to interact with the server in the Internet. Such an LTE physical layer based implementation of discovery has advantages over OTT (over-the-top) based techniques. First, the discovery process can be, and in some embodiments, is UE self-contained, e.g., without unnecessary back-and-forth interactions with the server. Even though some type of code-service mapping may, in some embodiments, need to be pre-installed to the client, such mapping is typically quite static, and thus there is no need for often interactions with the server. Second, the availability of service profile from the physical layer encoded discovery signal corresponds to an extremely short time delay for service discovery. In some embodiments, this short time delay can be in percentages of a second. Thirdly, a large number of discovery peers can be detected in one snapshot of the radio resources simultaneously. It can, and sometimes does, allow thousands of codes to be carried in a resource cycle. This can be further scaled up however at the cost of discovery latency.

In some embodiments, the resource allocation and service provisioning of D2D is controlled by the LTE network and thus by an operator. This allows operators to profit from either the 3rd party service providers or directly from the end users by providing an efficient discovery capable service platform empowered by LTE D2D. LTE D2D can be integrated with both LTE FDD and LTE TDD system over either DL or UL resources. Various embodiments described in the present application are directed to D2D over TDD system, e.g., an LTE TDD system, by using the configured GP resources corresponding to SSFs (Special Sub-Frames) which occur in LTE and/or similar systems. Allocation of TDD normal sub-frames for D2D may, and embodiments are used in addition to SFFs. However, when normal UL sub-frames are reserved for D2D, unless the entire HARQ resources (in period of 10 sub-frames for LTE TDD) are reserved (which may not reasonable in some cases), there is the possibility that the synchronous LTE UL HARQ re-transmission will clash with D2D reserved sub-frames. This can have the undesirable result of a suspension of either D2D discovery or UL transmissions, or unnecessary co-channel interference. This may adversely impact the UL performance for the access link, which is a result operators will want to avoid. Additionally, in some deployment scenarios, an operator may use a particular SSF configuration with over-budgeted GP resources to manage the co-existence with other TDD system such as TD-SCDMA. In this case, there are additional GP resources that are free for D2D.

In various embodiments, D2D over LTE TDD is advanced through the use of features described in the present application by allowing D2D resource allocation over the GP of LTE TDD SSFs (Special Sub-Frames). This use and design of D2D over SSF allows more efficient use of LTE TDD resources and facilitates interference-free co-existence with the LTE TDD for at least some time periods. In some embodiments where SSF is used to communicate discovery information, this approach avoids the clashing between D2D discovery signal and UL access transmission described above and/or with other synchronously configured UL transmissions. In some embodiments, this design uses the available SSF configuration information from the LTE TDD system, and therefore allows a new business model, in that the D2D system is operated with minimum coordination with the LTE system. The design can, and in some embodiments is used for both D2D discovery and D2D communication. In some embodiments, resources of the GP of the LTE TDD SSF are utilized for one or both of device to device discovery signaling and device to device traffic signaling.

Various embodiments are directed to a D2D resource allocation method over LTE TDD SSF that effectively creates a clean caravans for device to device communications, which allows good integration of D2D with a LTE TDD system by strict orthogonal time-frequency resource, thus ensuring little or minimum impact to an LTE TDD system, e.g., there is no scheduler restriction to LTE TDD eNB, and efficient use of TDD spectrum is supported. Various method and apparatus are directed to allocating D2D resources over GP by given a Special Sub-Frame configuration. In one aspect, a UE determine CP length of D2D discovery signal using the designated LTE TDD cell coverage and D2D range. In another aspect, the UE determines D2D Tx-start timing given the designated LTE TDD cell coverage and/or D2D range. In another aspect the UE determines D2D transmission duration given the designated LTE TDD cell coverage and D2D range. In another aspect, the UE determines receiving timing for decoding discovery signal given the designated LTE TDD cell coverage and D2D range. In some embodiments one or a few of the D2D configuration parameters are determined at the UE while other ones of the D2D parameters are communicated to the UE and may be used in determining the remaining D2D parameters.

Various embodiments make more efficient use of LTE TDD spectrum resources as compared to the case were certain TDD SSFs have to be activated with extra GP resources to manage the coexistence with TDS-CDMA deployment. A distinctive advantage of a D2D-over-SSF system from D2D-over-normal-subframe system is that the approach of D2D over SSF allows separate deployment of the D2D system without any impact to the LTE TDD system. The system configuration for the D2D system can be broadcasted either by a LTE access system RRC signaling or by D2D self-contained signals, which makes it possible for an operator to outsource to a 3rd-party (other than the LTE TDD operator) to run the D2D system with the minimum coordination with the LTE TDD operation in term of system configuration. That is, D2D parameters maybe communicated by a device such as a server rather than an LET base station with the server being possibly provided and maintained by someone other than the LTE operator.

In various embodiments a device, e.g., a wireless communications device in system 100 of Figure 1, and/or wireless communication device 300 of Figure 3, and/or a wireless communications device 1000 of Figure 10 and/or a wireless communications device of any of the Figures includes a module corresponding to each of the individual steps and/or operations described with regard to any of the Figures in the present application and/or described in the detailed description of the present application. In some embodiments, the modules are implemented in hardware, e.g., in the form of circuits. Thus, in at least some embodiments the modules may, and sometimes are implemented in hardware. In other embodiments, the modules may, and sometimes are, implemented as software modules including processor executable instructions which when executed by the processor of the communications device cause the device to implement the corresponding step or operation. In still other embodiments, some or all of the modules are implemented as a combination of hardware and software.

The techniques of various embodiments may be implemented using software, hardware and/or a combination of software and hardware. Various embodiments are directed to apparatus, e.g., stationary and/or mobile wireless communications devices, e.g., UE devices supporting device to device communications, access points such as base stations, e.g., eNodeB devices, network nodes, server nodes, and/or communications systems. Various embodiments are also directed to methods, e.g., method of controlling and/or operating network nodes, wireless communications devices such as mobile and stationary nodes supporting device to device communications, access points such as base stations and/or communications systems, e.g., hosts. Various embodiments are also directed to machine, e.g., computer, readable medium, e.g., ROM, RAM, CDs, hard discs, etc., which include machine readable instructions for controlling a machine to implement one or more steps of a method. The computer readable medium is, e.g., non-transitory computer readable medium.

It is understood that the specific order or hierarchy of steps in the processes disclosed is an example of exemplary approaches. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

In various embodiments nodes described herein are implemented using one or more modules to perform the steps corresponding to one or more methods, for example, signal processing, signal generation and/or transmission steps. Thus, in some embodiments various features are implemented using modules. Such modules may be implemented using software, hardware or a combination of software and hardware. Many of the above described methods or method steps can be implemented using machine executable instructions, such as software, included in a machine readable medium such as a memory device, e.g., RAM, floppy disk, etc. to control a machine, e.g., general purpose computer with or without additional hardware, to implement all or portions of the above described methods, e.g., in one or more nodes. Accordingly, among other things, various embodiments are directed to a machine-readable medium, e.g., a non-transitory computer readable medium, including machine executable instructions for causing a machine, e.g., processor and associated hardware, to perform one or more of the steps of the above-described method(s). Some embodiments are directed to a device, e.g., communications node, including a processor configured to implement one, multiple or all of the steps of one or more methods of the invention.

In some embodiments, the processor or processors, e.g., CPUs, of one or more devices, e.g., communications nodes such as network nodes, access nodes and/or wireless terminals, are configured to perform the steps of the methods described as being performed by the communications nodes. The configuration of the processor may be achieved by using one or more modules, e.g., software modules, to control processor configuration and/or by including hardware in the processor, e.g., hardware modules, to perform the recited steps and/or control processor configuration. Accordingly, some but not all embodiments are directed to a device, e.g., communications node, with a processor which includes a module corresponding to each of the steps of the various described methods performed by the device in which the processor is included. In some but not all embodiments a device, e.g., a communications node, includes a module corresponding to each of the steps of the various described methods performed by the device in which the processor is included. The modules may be implemented using software and/or hardware.

Some embodiments are directed to a computer program product comprising a computer-readable medium, e.g., a non-transitory computer-readable medium, comprising code for causing a computer, or multiple computers, to implement various functions, steps, acts and/or operations, e.g. one or more steps described above. Depending on the embodiment, the computer program product can, and sometimes does, include different code for each step to be performed. Thus, the computer program product may, and sometimes does, include code for each individual step of a method, e.g., a method of controlling a communications device or node. The code may be in the form of machine, e.g., computer, executable instructions stored on a computer-readable medium, e.g., a non-transitory computer-readable medium, such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU, configured to implement some or all of the steps of the methods described herein. The processor may be for use in, e.g., a communications device or other device described in the present application.

Various embodiments are well suited to communications systems using a device to device signaling protocol. Some embodiments use an Orthogonal Frequency Division Multiplexing (OFDM) based wireless device to device signaling protocol, e.g., WiFi signaling protocol or another OFDM based protocol. Some embodiments, support device to device communications during LTE GPs.

While described in the context of an OFDM system, at least some of the methods and apparatus of various embodiments are applicable to a wide range of communications systems including many non-OFDM and/or non-cellular systems.

Numerous additional variations on the methods and apparatus of the various embodiments described above will be apparent to those skilled in the art in view of the above description. Such variations are to be considered within the scope. The methods and apparatus may be, and in various embodiments are, used with Code Division Multiple Access (CDMA), OFDM, and/or various other types of communications techniques which may be used to provide wireless communications links between communications devices. In some embodiments one or more communications devices are implemented as access points which establish communications links with mobile nodes using OFDM and/or CDMA and/or may provide connectivity to the internet or another network via a wired or wireless communications link. In various embodiments the mobile nodes are implemented as notebook computers, personal data assistants (PDAs), or other portable devices including receiver/transmitter circuits and logic and/or routines, for implementing the methods. In the following, further examples are described to facilitate the understanding of the invention:

1. A method of operating a wireless communications device (106) which supports device to device communication, the method comprising:

receiving information indicating a maximum propagation delay $T_C$ for a wide area network system; and
determining a device to device transmission timing offset relative to a point in time in a recurring wide area network timing structure.

2. The method of example 1, further comprising:

determining a cyclic prefix length (CPL) to be used for device to device communication based on said maximum propagation delay $T_c$ and a maximum propagation delay $T_D$ supported for device to device communications.

3. The method of example 2, further comprising:

receiving information indicating said maximum propagation delay $T_D$ supported for device to device communications from a wide area network infrastructure element (102).

4. The method of example 2, wherein determining a cyclic prefix length (CPL) includes setting said CPL to the length of a first cyclic prefix (CP) used in the WAN if it is determined that $2T_C+T_D$ is less than or equal to the length of said first CP.

5. The method of example 4, wherein determining a cyclic prefix length (CPL) includes setting said CPL to the length of a second CP used in the WAN if it is determined that $2T_C+T_D$ is not less than or equal to the length of said first CP but is less than or equal to the length of the second CP.

6. The method of example 5, wherein determining a cyclic prefix length (CPL) includes setting said CPL to twice the length of the second CP length when said CPL is not set to the first CP length or the second CP length.

7. The method of example 6, further comprising:

setting a sub-carrier spacing to be used for device to device communication to half the subcarrier spacing used for WAN communication when said CPL is set to twice the second CP length.

8. The method of example 1, further comprising:

determining a device to device receiver timing offset indicating a timing offset relative to said point in time in said WAN timing structure to be used for device to device communication from maximum propagation delay Tc, maximum propagation delay $T_D$, and said determined device to device transmission timing offset.

9. The method of example 8, further comprising:

determining the number of symbol time periods in a device to device time period used for device to device communications from the size of said time period, the maximum propagation delay Tc, the maximum propagation delay $T_D$, and a symbol length to be used for device to device symbols.

10. The method of example 9, further comprising:

storing the determined device to device transmission timing offset indicating a device to device transmission timing offset relative to a point in a recurring wide area network timing structure; and
storing the device to device receiver timing offset indicating a device to device receiver timing offset relative to said point in a recurring wide area network timing structure.

11. A wireless communications device (300) which supports device to device communication, the wireless communications device (300) comprising:

means (404) for receiving information indicating a maximum propagation delay $T_C$ for a wide area network system; and
means (412) for determining a device to device transmission timing offset relative to a point in time in a recurring wide area network timing structure.

12. The wireless communications device (300) of example 11, further comprising:

means (422) for determining a cyclic prefix length (CPL) to be used for device to device communication based on said maximum propagation delay $T_c$ and a maximum propagation delay $T_D$ supported for device to device communications.

13. The wireless communications device (300) of example 12, further comprising:

means (408) for receiving information indicating said maximum propagation delay $T_D$ supported for device to device communications from a wide area network infrastructure element.

14. The wireless communications device (300) of example 12, wherein said means (422) for determining a cyclic prefix length (CPL) includes means (426) for setting said CPL to the length of a first CP used in the WAN if it is determined that $2T_C+T_D$ is less than or equal to length of said first CP.

15. The wireless communications device (300) of example 14, wherein said means (422) for determining a cyclic prefix length (CPL) includes means (430) for setting said CPL to the length of a second CP used in the WAN if it is determined that $2T_C+T_D$ is not less than or equal to the length of said first CP but is less than or equal to the length of the second CP.

16. A computer program product for use in a wireless communications device (300) which supports device to device communication, the computer program product comprising:

a non-transitory computer readable medium (304) comprising:

code (404) for causing at least one computer to receive information indicating a maximum propagation delay $T_C$ for a wide area network system; and
code (412) for causing said at least one computer to determine a device to device transmission timing offset relative to a point in time in a recurring wide area network timing structure.

17. A wireless communications device (300) which supports device to device communication, the wireless communications device (300) comprising:

at least one processor (302) configured to:

receive information indicating a maximum propagation delay $T_C$ for a wide area network system; and
determine a device to device transmission timing offset relative to a point in time in a recurring wide area network timing structure; and

memory (304) coupled to said at least one processor (302).

18. The wireless communications device (300) of example 17, wherein said at least one processor (302) is further configured to:

determine a cyclic prefix length (CPL) to be used for device to device communication based on said maximum propagation delay $T_C$ and a maximum propagation delay $T_D$ supported for device to device communications.

19. The wireless communications device (300) of example 18, wherein said at least one processor (302) is further configured to:

receive information indicating said maximum propagation delay $T_D$ supported for device to device communications from a wide area network infrastructure element.

20. The wireless communications device (300) of example 18, wherein said at least one processor (302) is further configured to set said CPL to the length of a first CP used in the WAN if it is determined that $2T_C+T_D$ is less than or equal to length of said first CP as part of being configured to determine a cyclic prefix length (CPL).

21. A method of operating a wireless communication device (1000) which supports device to device (D2D) communication, the method comprising:

receiving device to device (D2D) information including one or more device to device communication parameters, said one or more device to device communication parameters including at least one of: i) a timing offset parameter X indicating device to device transmission timing relative to a point in time in a recurring wide area network (WAN) timing structure, ii) a cyclic prefix length (CPL) to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length;
configuring the wireless communication device (1000) to operate in accordance with the received one or more device to device communications parameters; and
performing at least one of a device to device transmission or a device to device reception operation while the wireless communications device (1000) is configured to operate in accordance with the received one or more device to device communications parameters.

22. The method of example 21, wherein said one or more received device to device parameters includes at least three of the following parameters: i) a timing offset parameter X indicating device to device transmission timing relative to a point in time in a recurring wide area network timing structure, ii) a cyclic prefix length (CPL) to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length.

23. The method of example 21, further comprising:

storing the received one or more device to device communications parameters in memory.

24. The method of example 23, further comprising:

determining at least one device to device communications parameter from information including at least one of said received one or more device to device communications parameters.

25. The method of example 24, wherein the received one or more device to device communications parameters includes said symbol length parameter indicating the symbol length to be used for device to device symbols; and wherein determining at least one device to device communications parameter includes:

determining said symbol number parameter indicating the number of symbol time periods in a device to device time period used for device to device communications from the size of said device to device time period, a maximum WAN propagation delay Tc, a maximum device to device propagation delay $T_D$, and the symbol length to be used for device to device symbols.

26. A wireless communication device (1000) which supports device to device (D2D) communication, comprising:

means (1104) for receiving D2D information including one or more device to device communication parameters, said one or more device to device communication parameters including at least one of: i) a timing offset parameter X indicating device to device transmission timing relative to a point in time in a recurring wide area network timing structure, ii) a cyclic prefix length (CPL) to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length;
means (1112) for configuring the wireless communication device to operate in accordance with the received one or more device to device communications parameters; and

means (1114) for controlling the wireless communications device to perform at least one of a device to device transmission or a device to device reception operation while the wireless communications device is configured to operate in accordance with the received one or more device to device communications parameters.

27. The wireless communications device (1000) of example 26, wherein said one or more received device to device parameters includes at least three of the following parameters: i) a timing offset parameter X indicating device to device transmission timing relative to a point in time in a recurring wide area network timing structure, ii) a cyclic prefix length (CPL) to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length; and

28. The wireless communications device (1000) of example 26, further comprising:

means (1106) for storing the received one or more device to device communications parameters.

29. The wireless communications device (1000) of example 28, further comprising:

means (1108) for determining at least one device to device communications parameter from information including at least one of said received one or more device to device communications parameters.

30. The wireless communications device (1000) of example 29,
wherein the received one or more device to device communications parameters includes said symbol length parameter indicating the symbol length to be used for device to device symbols; and
wherein said means (1108) for determining at least one device to device communications parameter include:

means (1110) for determining said symbol number parameter indicating the number of symbol time periods in a device to device time period used for device to device communications from the size of said device to device time period, a maximum WAN propagation delay Tc, a maximum device to device propagation delay $T_D$, and the symbol length to be used for device to device symbols.

31. A wireless communication device (1000) which supports device to device (D2D) communication, comprising:

at least one processor (1002) configured to:

receive D2D information including one or more device to device communication parameters, said one or more device to device communication parameters including at least one of: i) a timing offset parameter X indicating device to device transmission timing relative to a point in time in a recurring wide area network (WAN) timing structure, ii) a cyclic prefix length (CPL) to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length;
configure the wireless communication device to operate in accordance with the received one or more device to device communications parameters; and
control the wireless communications device to perform at least one of a device to device transmission or a device to device reception operation while the wireless communications device is configured to operate in accordance with the received one or more device to device communications parameters; and

memory (1004) coupled to said at least one processor (1002).

32. The wireless communications device (1000) of example 31, wherein said one or more received device to device parameters includes at least three of the following parameters: i) a timing offset parameter X indicating device to device transmission timing relative to a point in time in a recurring wide area network timing structure, ii) a cyclic prefix length (CPL) to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length.

33. The wireless communications device (1000) of example 31, wherein said at least one processor (1002) is further configured to:

store the received one or more device to device communications parameters in said memory.

34. The wireless communications device (1000) of example 33, wherein said at least one processor (1002) is further configured to:

determine at least one device to device communications parameter from information including at least one of said received one or more device to device communications parameters.

35. A computer program product for use in a wireless communication device (1000) which supports device to device communication, the computer program product comprising:

a non-transitory computer readable medium (1004) comprising:

code (1104) for causing at least one computer to receive device to device information including one or more device to device communication parameters, said one or more device to device communication parameters including at least one of: i) a timing offset parameter X indicating device to device transmission timing relative to a point in time in a recurring wide area network (WAN) timing structure, ii) a cyclic prefix length (CPL) to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length; code (1112) for causing said at least one computer to configure the wireless communication device to operate in accordance with the received one or more device to device communications parameters; and code (1114) for causing said at least one computer to perform at least one of a device to device transmission or a device to device reception operation while the wireless communications device is configured to operate in accordance with the received one or more device to device communications parameters.

**Claims**

1. A method of operating a wireless communication device (1000) which supports device to device, D2D, communication, the method comprising:

receiving D2D information including one or more device to device communication parameters, said one or more device to device communication parameters including at least one of: i) a timing offset parameter X indicating device to device transmission timing relative to a point in time in a recurring wide area network, WAN, timing structure, ii) a cyclic prefix length, CPL, to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length; configuring the wireless communication device (1000) to operate in accordance with the received one or more device to device communications parameters; and performing at least one of a device to device transmission or a device to device reception operation while the wireless communications device (1000) is configured to operate in accordance with the received one or more device to device communications parameters.

2. The method of claim 1, wherein said one or more received device to device parameters includes at least three of the following parameters: i) a timing offset parameter X indicating device to device transmission timing relative to a point in time in a recurring wide area network timing structure, ii) a cyclic prefix length, CPL, to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length.

3. The method of claim 1, further comprising:

   storing the received one or more device to device communications parameters in memory.

4. The method of claim 3, further comprising:

   determining at least one device to device communications parameter from information including at least one of said received one or more device to device communications parameters.

5. The method of claim 4,
   wherein the received one or more device to device communications parameters includes said symbol length parameter indicating the symbol length to be used for device to device symbols; and
   wherein determining at least one device to device communications parameter includes:

   determining said symbol number parameter indicating the number of symbol time periods in a device to device time period used for device to device communications from the size of said device to device time period, a maximum WAN propagation delay Tc, a maximum device to device propagation delay $T_D$, and the symbol length to be used for device to device symbols.

6. A wireless communication device (1000) which supports device to device, D2D, communication, comprising:

   means (1104) for receiving D2D information including one or more device to device communication parameters, said one or more device to device communication parameters including at least one of: i) a timing offset parameter X indicating device to device transmission timing relative to a point in time in a recurring wide area network timing structure, ii) a cyclic prefix length, CPL, to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length; means (1112) for configuring the wireless communication device to operate in accordance with the received one or more device to device communications parameters; and means (1114) for controlling the wireless communications device to perform at least one of a device to device transmission or a device to device reception operation while the wireless communications device is configured to operate in accordance with the received one or more device to device communications parameters.

7. The wireless communications device (1000) of claim 6, wherein said one or more received device to device parameters includes at least three of the following parameters: i) a timing offset parameter X indicating device to device transmission timing relative to a point in time in a recurring wide area network timing structure, ii) a cyclic prefix length, CPL, to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length.

8. The wireless communications device (1000) of claim 6, further comprising:

   means (1106) for storing the received one or more device to device communications parameters.

9. The wireless communications device (1000) of claim 8, further comprising:

   means (1108) for determining at least one device to device communications parameter from information including at least one of said received one or more device to device communications parameters.

10. The wireless communications device (1000) of claim 9,
    wherein the received one or more device to device communications parameters includes said symbol length parameter indicating the symbol length to be used for device to device symbols; and
    wherein said means (1108) for determining at least one device to device communications parameter include:

    means (1110) for determining said symbol number parameter indicating the number of symbol time periods in a device to device time period used for device to device communications from the size of said device to device time period, a maximum WAN propagation delay Tc, a maximum device to device propagation delay $T_D$, and the symbol length to be used for device to device symbols.

11. A wireless communication device (1000) which supports device to device, D2D, communication, comprising:

at least one processor (1002) configured to:

receive D2D information including one or more device to device communication parameters, said one or more device to device communication parameters including at least one of: i) a timing offset parameter X indicating device to device transmission timing relative to a point in time in a recurring wide area network, WAN, timing structure, ii) a cyclic prefix length, CPL, to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length; configure the wireless communication device to operate in accordance with the received one or more device to device communications parameters; and control the wireless communications device to perform at least one of a device to device transmission or a device to device reception operation while the wireless communications device is configured to operate in accordance with the received one or more device to device communications parameters; and memory (1004) coupled to said at least one processor (1002).

12. The wireless communications device (1000) of claim 11, wherein said one or more received device to device parameters includes at least three of the following parameters: i) a timing offset parameter X indicating device to device transmission timing relative to a point in time in a recurring wide area network timing structure, ii) a cyclic prefix length, CPL, to be used for device to device communication, iii) a device to device receiver timing offset parameter indicating a timing offset relative to said point in time in said WAN timing structure to be used for device to device communication; iv) a symbol number parameter indicating a number of symbol time periods in a device to device time period used for device to device communications, and v) a symbol length parameter indicating a device to device symbol length.

13. The wireless communications device (1000) of claim 11, wherein said at least one processor (1002) is further configured to:

store the received one or more device to device communications parameters in said memory.

14. The wireless communications device (1000) of claim 13, wherein said at least one processor (1002) is further configured to:

determine at least one device to device communications parameter from information including at least one of said received one or more device to device communications parameters.

15. A computer program comprising instructions for performing a method according to any one of the claims 1 to 5 when executed on a computer.

FIGURE 1

200

START METHOD OF OPERATING A WIRELESS COMMUNICATIONS
DEVICE THAT SUPPORTS DEVICE TO DEVICE COMMUNICATION — 202

RECEIVE INFORMATION INDICATING A MAXIMUM PROPAGATION
DELAY $T_C$ FOR A WIDE AREA NETWORK SYSTEM
— 206
RECEIVE A WIRELESS SIGNAL FROM AN INFRASTRUCTURE
ELEMENT INDICATING SAID MAXIMUM PROPAGATION DELAY $T_C$
— 204

RECEIVE INFORMATION INDICATING A MAXIMUM PROPAGATION
DELAY $T_D$ SUPPORTED FOR DEVICE TO DEVICE COMMUNICATIONS
— 210
RECEIVE A WIRELESS SIGNAL FROM AN INFRASTRUCTURE
ELEMENT INDICATING SAID MAXIMUM PROPAGATION DELAY $T_D$
— 208

RECEIVE GP INFORMATION — 211
RECEIVE A WIRELESS SIGNAL FROM AN INFRASTRUCTURE
ELEMENT INDICATING A CONFIGURED GP
— 209

DETERMINE A DEVICE TO DEVICE TRANSMISSION TIMING OFFSET
RELATIVE TO A POINT IN TIME IN A RECURRING WIDE AREA
NETWORK TIMING STRUCTURE — 212

STORE THE DETERMINED DEVICE TO DEVICE TRANSMISSION
OFFSET INDICATING A DEVICE TO DEVICE TRANSMISSION TIMING
OFFSET RELATIVE TO A POINT IN A RECURRING WIDE AREA
NETWORK TIMING STRUCTURE — 214

DETERMINE A DEVICE TO DEVICE RECEIVER TIMING OFFSET
INDICATING A TIMING OFFSET RELATIVE TO SAID POINT IN TIME IN
WAN STRUCTURE TO BE USED FOR DEVICE TO DEVICE
COMMUNICATIONS FROM THE MAXIMUM PROPAGATION DELAY Tc,
MAXIMUM PROPAGATION DELAY $T_D$ AND DETERMINED
TRANSMISSION TIMING OFFSET — 216

STORE THE DETERMINED DEVICE TO DEVICE RECEIVER TIMING
OFFSET INDICATING A DEVICE TO DEVICE RECEIVER TIMING OFFSET
RELATIVE TO A POINT IN A RECURRING WIDE AREA NETWORK
TIMING STRUCTURE — 218

A — 220

FIGURE 2A

| FIGURE 2A |
| FIGURE 2B |

FIGURE 2

A — 220

DETERMINE A CYCLIC PREFIX LENGTH (CPL) TO BE USED FOR DEVICE TO DEVICE COMMUNICATIONS BASED ON SAID MAXIMUM PROPAGATION DELAY Tc AND A MAXIMUM PROPAGATION DELAY $T_D$ SUPPORTED FOR DEVICE TO DEVICE COMMUNICATIONS — 222

IS $2T_C + T_D \leq$ LENGTH OF A FIRST CP OF THE WAN ? — 224

Y

N

SET THE CYCLIC PREFIX LENGTH (CPL) TO THE LENGTH OF THE FIRST CP — 226

IS $2T_C + T_D \leq$ LENGTH OF A SECOND CP OF THE WAN ? — 228

Y

N

SET THE CYCLIC PREFIX LENGTH (CPL) TO THE LENGTH OF THE SECOND CP — 230

SET THE CYCLIC PREFIX LENGTH (CPL) TO TWICE THE LENGTH OF THE SECOND CP — 232

SET A SUBCARRIER SPACING TO BE USED FOR DEVICE TO DEVICE COMMUNICATION TO HALF THE SUBCARRIER SPACING USED FOR WAN COMMUNICATIONS — 234

DETERMINE A SYMBOL LENGTH (SL) FOR DEVICE TO DEVICE SYMBOLS BASED ON THE DETERMINED CPL — 235

DETERMINE THE NUMBER OF SYMBOL TIME PERIODS IN A DEVICE TO DEVICE TIME PERIOD USED FOR DEVICE TO DEVICE COMMUNICATIONS FROM THE SIZE OF SAID TIME PERIOD, THE MAXIMUM PROPAGATION DELAY $T_C$, THE MAXIMUM PROPAGATION DELAY $T_D$ AND A SYMBOL LENGTH TO BE USED FOR DEVICE TO DEVICE COMMUNICATIONS — 236

TRANSMIT A DEVICE TO DEVICE SIGNAL IN ACCORDANCE WITH THE DETERMINED DEVICE TO DEVICE TRANSMISSION TIMING OFFSET AND DETERMINED CPL — 238

RECEIVE A DEVICE TO DEVICE SIGNAL IN ACCORDANCE WITH THE DETERMINED DEVICE TO DEVICE RECEIVER TIMING OFFSET AND DETERMINED CPL — 240

FIGURE 2B

300

WIRELESS COMMUNICATIONS DEVICE, E.G.,
UE SUPPORTING DEVICE TO DEVICE
COMMUNICATIONS

304

MEMORY

306

INPUT
MODULE

311

ROUTINES

302

308

OUTPUT
MODULE

PROCESSOR

309

313

DATA/
INFORMATION

FIGURE 3

EP 3 007 397 A1

400 ⟶ 401

ASSEMBLY OF MODULES (Part A) — 404

MODULE CONFIGURED TO RECEIVE INFORMATION INDICATING A MAXIMUM PROPAGATION DELAY $T_C$ FOR A WIDE AREA NETWORK SYSTEM — 406

MODULE CONFIGURED TO RECEIVE A WIRELESS SIGNAL FROM AN INFRASTRUCTURE ELEMENT INDICATING SAID MAXIMUM PROPAGATION DELAY $T_C$

MODULE CONFIGURED TO RECEIVE INFORMATION INDICATING A MAXIMUM PROPAGATION DELAY $T_D$ SUPPORTED FOR DEVICE TO DEVICE COMMUNICATIONS — 408
— 410

MODULE CONFIGURED TO RECEIVE A WIRELESS SIGNAL FROM AN INFRASTRUCTURE ELEMENT INDICATING SAID MAXIMUM PROPAGATION DELAY $T_D$

MODULE CONFIGURED TO RECEIVE GP INFORMATION — 409
— 411
MODULE CONFIGURED RECEIVE A WIRELESS SIGNAL FROM AN INFRASTRUCTURE ELEMENT INDICATING A CONFIGURED GP

MODULE CONFIGURED TO RECEIVE A WIRELESS BROADCAST SIGNAL FROM AN INFRASTRUCTURE ELEMENT COMMUNICATING INFORMATION INDICATING A MAXIMUM PROPAGATION DELAY $T_C$ FOR A WIDE AREA NETWORK SYSTEM AND A MAXIMUM PROPAGATION DELAY $T_D$ SUPPORTED FOR DEVICE TO DEVICE COMMUNICATIONS — 450

MODULE CONFIGURED TO RECEIVE A WIRELESS BROADCAST SIGNAL FROM AN INFRASTRUCTURE ELEMENT COMMUNICATING INFORMATION INDICATING A MAXIMUM PROPAGATION DELAY $T_C$ FOR A WIDE AREA NETWORK SYSTEM, A MAXIMUM PROPAGATION DELAY $T_D$ SUPPORTED FOR DEVICE TO DEVICE COMMUNICATIONS, AND GP INFORMATION — 451

MODULE CONFIGURED TO DETERMINE A DEVICE TO DEVICE TRANSMISSION TIMING OFFSET RELATIVE TO A POINT IN TIME IN A RECURRING WIDE AREA NETWORK TIMING STRUCTURE — 412

MODULE CONFIGURED TO STORE THE DETERMINED DEVICE TO DEVICE TRANSMISSION OFFSET INDICATING A DEVICE TO DEVICE TRANSMISSION TIMING OFFSET RELATIVE TO A POINT IN A RECURRING WIDE AREA NETWORK TIMING STRUCTURE — 414

MODULE CONFIGURED TO DETERMINE A DEVICE TO DEVICE RECEIVER TIMING OFFSET INDICATING A TIMING OFFSET RELATIVE TO SAID POINT IN TIME IN WAN STRUCTURE TO BE USED FOR DEVICE TO DEVICE COMMUNICATIONS FROM THE MAXIMUM PROPAGATION DELAY $T_C$, MAXIMUM PROPAGATION DELAY $T_D$ AND DETERMINED TRANSMISSION TIMING OFFSET — 416

MODULE CONFIGURED TO STORE THE DETERMINED DEVICE TO DEVICE RECEIVER TIMING OFFSET INDICATING A DEVICE TO DEVICE RECEIVER TIMING OFFSET RELATIVE TO A POINT IN A RECURRING WIDE AREA NETWORK TIMING STRUCTURE — 418

FIGURE 4A

| FIGURE 4A | FIGURE 4B |

FIGURE 4

27

403

ASSEMBLY OF MODULES (Part B) 422

MODULE CONFIGURED TO DETERMINE A CYCLIC PREFIX LENGTH (CPL) TO BE USED FOR DEVICE TO DEVICE COMMUNICATIONS BASED ON SAID MAXIMUM PROPAGATION DELAY Tc AND A MAXIMUM PROPAGATION DELAY $T_D$ SUPPORTED FOR DEVICE TO DEVICE COMMUNICATIONS

424

MODULE CONFIGURED TO DETERMINE IF $2T_C + T_D$ IS LESS THAN OR EQUAL TO THE LENGTH OF A FIRST CYCLIC PREFIX OF THE WAN

425

MODULE CONFIGURED TO CONTROL OPERATION AS A FUNCTION OF THE DETERMINATION AS TO WHETHER OR NOT $2T_C + T_D$ IS LESS THAN OR EQUAL TO THE LENGTH OF THE FIRST CYCLIC PREFIX OF THE WAN

MODULE CONFIGURED TO SET THE CYCLIC PREFIX LENGTH (CPL) TO THE LENGTH OF THE FIRST CP USED IN THE WAN WHEN IT IS DETERMINED THAT $2T_C + T_D$ IS LESS THAN OR EQUAL TO THE LENGTH OF THE FIRST CP

426

MODULE CONFIGURED TO DETERMINE IF $2T_C + T_D$ IS LESS THAN OR EQUAL TO THE LENGTH OF A SECOND CYCLIC PREFIX OF THE WAN 428

429

MODULE CONFIGURED TO CONTROL OPERATION AS A FUNCTION OF THE DETERMINATION AS TO WHETHER OR NOT $2T_C + T_D$ IS LESS THAN OR EQUAL TO THE LENGTH OF THE SECOND CYCLIC PREFIX OF THE WAN 432

MODULE CONFIGURED TO SET THE CYCLIC PREFIX LENGTH (CPL) TO THE LENGTH OF THE SECOND CP USED IN THE WAN WHEN IT IS DETERMINED THAT $(2 T_C + T_D)$ GREATER THAN THE LENGTH OF THE FIRST CP BUT IS LESS THAN OR EQUAL TO THE LENGTH OF THE SECOND CP OF THE WAN

430

MODULE CONFIGURED TO SET THE CYCLIC PREFIX LENGTH (CPL) TO TWICE THE LENGTH OF THE SECOND CP OF THE WAN WHEN SAID CPL IS NOT SET TO THE FIRST CP LENGTH OR THE SECOND CP LENGTH

434

MODULE CONFIGURED TO SET A SUBCARRIER SPACING TO BE USED FOR DEVICE TO DEVICE COMMUNICATION TO HALF THE SUBCARRIER SPACING USED FOR WAN COMMUNICATIONS WHEN THE CPL IS SET TO TWICE THE SECOND CP LENGTH

MODULE CONFIGURED TO DETERMINE A SYMBOL LENGTH (SL) FOR DEVICE TO DEVICE SYMBOLS BASED ON THE DETERMINED CPL 435

436

MODULE CONFIGURED TO DETERMINE THE NUMBER OF SYMBOL TIME PERIODS IN A DEVICE TO DEVICE TIME PERIOD USED FOR DEVICE TO DEVICE COMMUNICATIONS FROM THE SIZE OF SAID TIME PERIOD, THE MAXIMUM PROPAGATION DELAY Tc, THE MAXIMUM PROPAGATION DELAY $T_D$ AND A SYMBOL LENGTH TO BE USED FOR DEVICE TO DEVICE COMMUNICATIONS

438

MODULE CONFIGURED TO TRANSMIT A DEVICE TO DEVICE SIGNAL IN ACCORDANCE WITH THE DETERMINED DEVICE TO DEVICE TRANSMISSION TIMING OFFSET AND DETERMINED CPL

440

MODULE CONFIGURED TO RECEIVE A DEVICE TO DEVICE SIGNAL IN ACCORDANCE WITH THE DETERMINED DEVICE TO DEVICE RECEIVER TIMING OFFSET AND DETERMINED CPL

FIGURE 4B

D2D SERVER — 504

MN 3, E.G., D2D CAPABLE UE — 514

530

STATIONARY NODE, E.G., D2D SYSTEM DEVICE — 506

524

528

MN 2, E.G., D2D CAPABLE UE — 512

526

522

519

518

520

521

502 — BASE STATION E.G., eNB

517

516

550

551

552

553

MN 1, E.G., D2D CAPABLE UE — 510

555

554

500

532

| | WIRELESS D2D LINK |
| 534 | WIRELESS WAN LINK |
| 533 | APPLICATION LAYER SIGNALING |
| 536 | LEGEND |

FIGURE 5

606 → DL  608 → GP  610 → UL

600

602

BASE
STATION,
E.G., eNB

612 →

t (616)  (616)t

604

MN 1
E.G.,
D2D
CAPABLE
UE

614 →

D2D POTENTIAL
RESOURCES
(618)

FIGURE 6

EP 3 007 397 A1

700

704

$T_f$

ONE RADIO FRAME (702)

$T_{HALFFRAME}$ 710

ONE HALF FRAME (706) | ONE HALF FRAME (708)

732
$T_{SUBFRAME}$

| SUBFRAME #0 | SUBFRAME #1 (SSF) | SUBFRAME #2 | SUBFRAME #3 | SUBFRAME #4 | SUBFRAME #5 | SUBFRAME #6 (SSF) | SUBFRAME #7 | SUBFRAME #8 | SUBFRAME #9 |

734 712 736
714 716 718 720 722 724 726 728 730

$T_{SLOT}$
738

DwPTS 740

GP 742

G 760

UpPTS 744

DwPTS 746

GP 748

G 760

UpPTS 750

FIGURE 7

FIGURE 8

800

804
X

818
$n^{TH}$ SYMBOL

816
$2^{ND}$ SYMBOL

814
$1^{ST}$ SYMBOL

CP
820

MAIN BODY
822

CPL
810

RTLO
806

812
L

USABLE GP DURATION = G - 2Tc
808

END OF DwPTS
802

900

START METHOD OF OPERATING A WIRELESS COMMUNICATIONS DEVICE
WHICH SUPPORTS DEVICE TO DEVICE (D2D) COMMUNICATIONS
902

RECEIVE D2D INFORMATION INCLUDING ONE OR MORE DEVICE TO DEVICE
COMMUNICATIONS PARAMETERS INCLUDING AT LEAST ONE OF: i) A TIMING OFFSET
PARAMETER X INDICATING DEVICE TO DEVICE TRANSMISSION TIMING RELATIVE TO A
POINT IN TIME IN A RECURRING WIDE AREA NETWORK TIMING STRUCTURE, ii) A CYCLIC
PREFIX LENGTH (CPL) TO BE USED FOR DEVICE TO DEVICE COMMUNICATION, iii) A
DEVICE TO DEVICE RECEIVER TIMING OFFSET PARAMETER INDICATING A TIMING OFFSET
RELATIVE TO SAID POINT IN TIME IN SAID WAN STRUCTURE TO BE USED FOR DEVICE TO
DEVICE COMMUNICATIONS, iv) A SYMBOL NUMBER PARAMETER INDICATING A NUMBER
OF SYMBOL TIME PERIODS IN A DEVICE TO DEVICE TIME PERIOD USED FOR DEVICE TO
DEVICE COMMUNICATIONS AND v) A SYMBOL LENGTH PARAMETER INDICATING A DEVICE
TO DEVICE SYMBOL LENGTH
904

STORE THE RECEIVED ONE OR MORE DEVICE TO DEVICE COMMUNICATIONS
PARAMETERS IN MEMORY
906

DETERMINE AT LEAST ONE DEVICE TO DEVICE COMMUNICATIONS PARAMETER FROM
INFORMATION INCLUDING AT LEAST ONE OF SAID RECEIVED ONE OR MORE DEVICE TO
DEVICE COMMUNICATIONS PARAMETERS
910

DETERMINE SAID SYMBOL NUMBER PARAMETER INDICATING THE NUMBER OF
SYMBOL TIME PERIODS IN A DEVICE TO DEVICE TIME PERIOD USED FOR DEVICE TO
DEVICE COMMUNICATIONS FROM THE SIZE OF SAID DEVICE TO DEVICE TIME PERIOD,
A MAXIMUM WAN PROPAGATION DELAY $T_C$, A MAXIMUM DEVICE TO DEVICE
PROPAGATION DELAY $T_D$ AND THE SYMBOL LENGTH TO BE USED FOR DEVICE TO
DEVICE SYMBOLS.
908

STORE THE ONE OR MORE DETERMINED DEVICE TO DEVICE COMMUNICATIONS
PARAMETERS IN MEMORY
911

CONFIGURE THE WIRELESS COMMUNICATIONS DEVICE TO OPERATE IN ACCORDANCE
WITH THE RECEIVED ONE OR MORE DEVICE TO DEVICE COMMUNICATIONS PARAMETERS
912

CONFIGURE THE WIRELESS COMMUNICATIONS DEVICE TO OPERATE IN ACCORDANCE WITH THE
DETERMINED ONE OR MORE DEVICE TO DEVICE COMMUNICATIONS PARAMETERS
913

PERFORM AT LEAST ONE OF A DEVICE TO DEVICE TRANSMISSION OR A DEVICE TO
DEVICE RECEPTION OPERATION WHILE THE WIRELESS COMMUNICATIONS DEVICE IS
CONFIGURED TO OPERATE IN ACCORDANCE WITH THE RECEIVED ONE OR MORE DEVICE
TO DEVICE COMMUNICATIONS PARAMETERS
914

FIGURE 9

FIGURE 10

/ 1100

| ASSEMBLY OF MODULES | / 1104 |
| --- | --- |

MODULE CONFIGURED TO RECEIVE D2D INFORMATION INCLUDING ONE OR MORE DEVICE TO DEVICE COMMUNICATIONS PARAMETERS INCLUDING AT LEAST ONE OF: i) A TIMING OFFSET PARAMETER X INDICATING DEVICE TO DEVICE TRANSMISSION TIMING RELATIVE TO A POINT IN TIME IN A RECURRING WIDE AREA NETWORK TIMING STRUCTURE, ii) A CYCLIC PREFIX LENGTH (CPL) TO BE USED FOR DEVICE TO DEVICE COMMUNICATION, iii) A DEVICE TO DEVICE RECEIVER TIMING OFFSET PARAMETER INDICATING A TIMING OFFSET RELATIVE TO SAID POINT IN TIME IN SAID WAN STRUCTURE TO BE USED FOR DEVICE TO DEVICE COMMUNICATIONS, iv) A SYMBOL NUMBER PARAMETER INDICATING A NUMBER OF SYMBOL TIME PERIODS IN A DEVICE TO DEVICE TIME PERIOD USED FOR DEVICE TO DEVICE COMMUNICATIONS AND v) A SYMBOL LENGTH PARAMETER INDICATING A DEVICE TO DEVICE SYMBOL LENGTH

1106
MODULE CONFIGURED TO STORE THE RECEIVED ONE OR MORE DEVICE TO DEVICE COMMUNICATIONS PARAMETERS IN MEMORY
1108

MODULE CONFIGURED TO DETERMINE AT LEAST ONE DEVICE TO DEVICE COMMUNICATIONS PARAMETER FROM INFORMATION INCLUDING AT LEAST ONE OF SAID RECEIVED ONE OR MORE DEVICE TO DEVICE COMMUNICATIONS PARAMETERS 1110

MODULE CONFIGURED TO DETERMINE SAID SYMBOL NUMBER PARAMETER INDICATING THE NUMBER OF SYMBOL TIME PERIODS IN A DEVICE TO DEVICE TIME PERIOD USED FOR DEVICE TO DEVICE COMMUNICATIONS FROM THE SIZE OF SAID DEVICE TO DEVICE TIME PERIOD, A MAXIMUM WAN PROPAGATION DELAY $T_C$, A MAXIMUM DEVICE TO DEVICE PROPAGATION DELAY $T_D$ AND THE SYMBOL LENGTH TO BE USED FOR DEVICE TO DEVICE SYMBOLS.

1120
MODULE CONFIGURED TO DETERMINE SAID TIMING OFFSET PARAMETER X INDICATING DEVICE TO DEVICE TRANSMISSION TIMING

1122
MODULE CONFIGURED TO DETERMINE SAID CPL TO BE USED FOR DEVICE TO DEVICE COMMUNICATIONS

1124
MODULE CONFIGURED TO DETERMINE SAID DEVICE TO DEVICE RECEIVER TIMING OFFSET PARAMETER TO BE USED FOR DEVICE TO DEVICE COMMUNICATIONS

1126
MODULE CONFIGURED TO DETERMINE SAID SYMBOL LENGTH PARAMETER INDICATING A DEVICE TO DEVICE SYMBOL LENGTH

1111
MODULE CONFIGURED TO STORE ONE OR MORE DETERMINED DEVICE TO DEVICE COMMUNICATIONS PARAMETERS IN MEMORY
1112

MODULE CONFIGURED TO CONFIGURE THE WIRELESS COMMUNICATIONS DEVICE TO OPERATE IN ACCORDANCE WITH THE RECEIVED ONE OR MORE DEVICE TO DEVICE COMMUNICATIONS PARAMETERS

MODULE CONFIGURED TO CONFIGURE THE WIRELESS COMMUNICATIONS DEVICE TO OPERATE IN ACCORDANCE WITH THE DETERMINED ONE OR MORE DEVICE TO DEVICE COMMUNICATIONS PARAMETERS
1113

MODULE CONFIGURED TO PERFORM AT LEAST ONE OF A DEVICE TO DEVICE TRANSMISSION OR A DEVICE TO DEVICE RECEPTION OPERATION WHILE THE WIRELESS COMMUNICATIONS DEVICE IS CONFIGURED TO OPERATE IN ACCORDANCE WITH THE RECEIVED ONE OR MORE DEVICE TO DEVICE COMMUNICATIONS PARAMETERS
1114

## FIGURE 11

**Europäisches Patentamt**

**European Patent Office**

**Office européen des brevets**

# EUROPEAN SEARCH REPORT

Application Number

EP 15 18 7906

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/255450 A1 (WANG RENQIU [US] ET AL) 20 October 2011 (2011-10-20) <br> * paragraph [0083] - paragraph [0099] * <br> * figure 11 * <br> ----- | 1-4,6-9, 11-15 | INV. <br> H04L27/26 <br> H04W16/14 |
| X | YU LI ET AL: "Adaptive TDD UL/DL slot utilization for cellular controlled D2D communications", <br> MOBILE CONGRESS (GMC), 2011 GLOBAL, IEEE, <br> 17 October 2011 (2011-10-17), pages 1-6, XP032073245, <br> DOI: 10.1109/GMC.2011.6103908 <br> ISBN: 978-1-4673-0346-0 <br> * Section "Conventional resource reuse scheme for D2D communications in TD-LTE system " * <br> ----- | 1-4,6-9, 11-15 | |
| A | WO 2012/034269 A1 (NOKIA CORP [FI]; WANG HAIMING [CN]; GAO CHUNYAN [CN]) 22 March 2012 (2012-03-22) <br> * page 15, line 26 - page 16, line 5 * <br> ----- | 1,6,11, 15 | |
| A | LEI LEI ET AL: "Operator controlled device-to-device communications in LTE-advanced networks", <br> IEEE WIRELESS COMMUNICATIONS, IEEE SERVICE CENTER, PISCATAWAY, NJ, US, <br> vol. 19, no. 3, 1 June 2012 (2012-06-01), pages 96-104, XP011480414, <br> ISSN: 1536-1284, DOI: 10.1109/MWC.2012.6231164 <br> * page 5; figure 2 * <br> ----- <br> -/-- | 1,6,11, 15 | **TECHNICAL FIELDS SEARCHED (IPC)** <br><br> H04L |

The present search report has been drawn up for all claims

| Place of search | Date of completion of the search | Examiner |
|---|---|---|
| Berlin | 29 February 2016 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 18 7906

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "3rd Generation Partnership Project;Technical Specification Group Radio Access Network;Physical Channels and Modulation(Release 8)", 3GPP DRAFT; 36.211 V0.1.2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Riga, Latvia; 20061108, 8 November 2006 (2006-11-08), XP050103479, [retrieved on 2006-11-08] * table 2 * ----- | 1,6,11, 15 | |

TECHNICAL FIELDS
SEARCHED       (IPC)

The present search report has been drawn up for all claims

| Place of search | Date of completion of the search | Examiner |
|---|---|---|
| Berlin | 29 February 2016 | Chave, Julien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 18 7906

This annex lists the patent family members relating to the patent documents cited in the above-mentioned European search report.
The members are as contained in the European Patent Office EDP file on
The European Patent Office is in no way liable for these particulars which are merely given for the purpose of information.

29-02-2016

| Patent document cited in search report | Publication date | Patent family member(s) | Publication date |
|---|---|---|---|
| US 2011255450 A1 | 20-10-2011 | CN 102845118 A | 26-12-2012 |
| | | EP 2559307 A1 | 20-02-2013 |
| | | JP 5852098 B2 | 03-02-2016 |
| | | JP 2013530570 A | 25-07-2013 |
| | | JP 2014212541 A | 13-11-2014 |
| | | JP 2016015731 A | 28-01-2016 |
| | | KR 20130019426 A | 26-02-2013 |
| | | TW 201204072 A | 16-01-2012 |
| | | US 2011255450 A1 | 20-10-2011 |
| | | WO 2011130626 A1 | 20-10-2011 |
| WO 2012034269 A1 | 22-03-2012 | EP 2617145 A1 | 24-07-2013 |
| | | US 2013170387 A1 | 04-07-2013 |
| | | WO 2012034269 A1 | 22-03-2012 |

EPO FORM P0459

For more details about this annex : see Official Journal of the European Patent Office, No. 12/82